# EUROPEAN PATENT APPLICATION

(11) **EP 4 668 709 A1**
(43) Date of publication of application: **24.12.2025**
(21) Application number: 24777990.3
(22) Date of filing: 26.03.2024
(51) Int. Cl.: H04L 61/4511, H04W 8/26

(54) **COMMUNICATION METHOD AND COMMUNICATION APPARATUS**

(30) Priority: 31.03.2023 CN 202310363701
(71) Applicant: Huawei Technologies Co., Ltd., Shenzhen, Guangdong 518129 (CN)
(72) Inventor: LI, Yongcui, Shenzhen, Guangdong 518129 (CN); NI, Hui, Shenzhen, Guangdong 518129 (CN)
(74) Representative: MERH-IP Matias Erny Reichl Hoffmann Patentanwälte PartG mbB
(86) International application number: PCT/CN2024/083698
(87) International publication number: WO 2024/199202

(57) **Abstract**

This application provides a communication method and a communication apparatus. The method includes: A first network element receives a first query message from a terminal, where the first query message includes information about a first domain name, the first domain name is not authorized in a visited network of the terminal, and the first network element is a network element in the visited network of the terminal; the first network element sends a second query message to a domain name system server based on the first query message, where the second query message includes the information about the first domain name and information about a home network of the terminal, and the information about the home network is used to determine an address of an application server; and the first network element receives the address of the application server from the DNS server. This can avoid a problem that the terminal cannot access a service corresponding to a domain name because the domain name is not authorized in the visited network, and improve quality of a communication service of the terminal.

## Description

This application claims priority to Chinese Patent Application No. 202310363701.0, filed with the China National Intellectual Property Administration on March 31, 2023 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

In a mobile communication network, identifiers (identifiers, IDs) of public land mobile networks (public land mobile networks, PLMNs) may be used to distinguish between mobile communication networks (that is, PLMNs) of different standards of different operators. A PLMN to which a terminal subscribes is a home PLMN (home PLMN, HPLMN). When the terminal leaves coverage of a wireless network of the HPLMN due to movement or other reasons, if the terminal is currently in coverage of a wireless network of another PLMN, and the PLMN is a PLMN that has signed a roaming agreement with the HPLMN of the terminal, the terminal may access the PLMN via the wireless network of the PLMN. The PLMN may be referred to as a visited PLMN (visited PLMN, VPLMN), and accessing the VPLMN by the terminal may be referred to as roaming. When a user plane of the terminal is terminated in the HPLMN, roaming of the terminal may be referred to as home routed (home routed, HR) roaming.

In an HR roaming scenario of the terminal, the HPLMN may authorize services corresponding to some domain names to be offloaded to a local part of a data network in the VPLMN. A visited session management function (visited session management function) V-SMF network element in the VPLMN may configure a related network element in the VPLMN based on authorization information from the HPLMN, including configuring edge application server discovery (edge application server discovery, EASDF). When the terminal queries an internet protocol (internet protocol, IP) address of an application server (application server, AS) corresponding to a domain name authorized to be offloaded to the VPLMN, a V-EASDF network element may interact with a domain name system (domain name system) server to obtain the AS IP address queried by the terminal, so that the AS provides the service corresponding to the domain name for the terminal.

However, when the terminal roams within the VPLMN, if the HPLMN does not authorize services corresponding to one or more domain names to be offloaded to a local data network in the VPLMN, quality of services that can be obtained by the terminal may be limited.

### SUMMARY

Embodiments of this application provide a communication method and a communication apparatus, so that a terminal can obtain, in a serving network, an address of an application server corresponding to a domain name that is not authorized to offload a corresponding service to a local data network. In this way, the terminal can access the application server in the serving network and obtain a service provided by the application server, thereby improving quality of a communication service of the terminal.

According to a first aspect, a communication method is provided. The method may be performed by a communication apparatus, and the communication apparatus may be a communication device or may be a component (such as a chip or a chip system) configured in a communication device. The following uses an example in which a first network element performs the method for description.

The method includes: The first network element receives a first query message from a terminal, where the first network element is in a visited network of the terminal, the first query message includes information about a first domain name, and the first domain name is not authorized in the visited network of the terminal; the first network element sends a second query message to a domain name system (domain name system, DNS) server, where the second query message includes the information about the first domain name and information about a home network of the terminal; and the first network element receives an address of an application server from the DNS server.

The information about the home network in the second query message is used to determine the address of the application server. In other words, the information about the home network in the second query message is used to obtain the address of the application server. The application server is configured to provide the terminal with a service corresponding to the first domain name.

For example, that the first domain name is not authorized in the visited network of the terminal includes: The service corresponding to the first domain name is not authorized by the home network of the terminal to be offloaded to a local data network.

According to the foregoing solution, when the first network element in the visited network of the terminal provides an AS discovery service for the terminal, if a domain name provided when the terminal queries an address of an AS is a domain name that is not authorized in the visited network of the terminal, the first network element provides the information about the home network of the terminal for the DNS server, so that the DNS server can find an address of an AS corresponding to a domain name that is not authorized to offload a service to a local DN of a serving network of the terminal, and provide the address of the AS for the terminal via the first network element. In this way, the terminal can obtain the address of the application server corresponding to the domain name that is not authorized in the serving network to offload a corresponding service to the local data network, so that the terminal can access the application server in the serving network and obtain a service provided by the application server. In addition, this can avoid a problem that the terminal cannot access a service corresponding to a domain name because the domain name is not authorized, and improve quality of a communication service of the terminal.

With reference to the first aspect, in some implementations of the first aspect, the method further includes: The first network element receives information from a second network element, where the information indicates a rule used for a query message that is from the terminal and that is used to query the address of the application server, and the rule includes: When the query message used to query the address of the application server includes a domain name that is not authorized in the visited network of the terminal, the first network element provides the information about the home network for the DNS server.

In an implementation, the rule specifically includes: When the query message used to query the address of the application server includes the domain name that is not authorized in the visited network of the terminal, the first network element includes the information about the home network and the unauthorized domain name in one message, and provides the message for the DNS server.

According to the foregoing solution, the second network element may indicate, to the first network element, a rule used to handle a DNS query message, and the rule includes: when an obtained query message includes a domain name that is not authorized in the serving network, providing the information about the home network for the DNS server, so that the first network element may handle the DNS query message according to the rule. In this way, the DNS server may obtain the information about the home network of the terminal, obtain, based on the first domain name, the information about the home network of the terminal, and address affinity, an address of an AS corresponding to the first domain name, and provide the address of the AS corresponding to the first domain name for the terminal, so that the terminal can access the application server in the serving network and obtain a communication service. This can avoid a problem that the terminal cannot access a service corresponding to a domain name because the domain name is not authorized, and improve quality of a communication service of the terminal.

In an implementation, the information specifically indicates a rule used for the first query message, and the rule includes: The first network element provides the information about the home network for the DNS server.

With reference to the first aspect, in some implementations of the first aspect, the first network element is a function network element that is in the visited network of the terminal and that is configured to discover an application server, and the second network element is a function network element that is in the visited network of the terminal and that is configured to manage a session of the terminal.

With reference to the first aspect, in some implementations of the first aspect, the second query message includes an ECS option information element, and the ECS option information element indicates the information about the home network.

According to the foregoing solution, the ECS option information element in the DNS query message is reused to transmit the information about the home network. Compared with a manner in which a format of the DNS query message is modified to indicate the information about the home network, this solution can reduce implementation complexity.

With reference to the first aspect, in some implementations of the first aspect, the information about the home network includes one or more of the following:
an internet protocol IP address of the terminal, an IP address of a user plane function network element in the home network, or a dedicated address of the home network.

According to the foregoing solution, the information about the home network may be the IP address of the terminal, an address of a network element in the home network, or the dedicated address of the home network used to obtain the address of the AS, so that accuracy of obtaining the address of the AS by the DNS server based on the information about the home network can be improved.

With reference to the first aspect, in some implementations of the first aspect, that the first network element receives the address of the application server from the DNS server includes: The first network element receives, from the DNS server, a second response message for the second query message, where the second response message includes the address of the application server. The method further includes: The first network element sends, to the terminal, a first response message for the first query message, where the first response message includes the address of the application server.

According to the foregoing solution, the first network element obtains, from the DNS server, the address of the AS corresponding to the first domain name, and provides, for the terminal, the address of the AS corresponding to the first domain name in response to a query of the terminal, so that the terminal obtains, in the serving network, an address of an AS corresponding to a domain name that is not authorized to offload a service to a local DN of the visited network.

With reference to the first aspect, in some implementations of the first aspect, the method further includes: The first network element obtains information about a domain name that is authorized in the visited network of the terminal and/or information about a domain name that is not authorized in the visited network of the terminal; and the first network element determines, based on the information about the domain name, that the first domain name is not authorized in the visited network of the terminal.

For example, the information about the domain name includes a first domain name set and/or a second domain name set, the first domain name set includes one or more domain names authorized in the visited network of the terminal, and the first domain name does not belong to the first domain name set. The information about the domain name includes the second domain name set, the second domain name set includes one or more domain names that are not authorized in the visited network of the terminal, and the first domain name belongs to the second domain name set.

According to the foregoing solution, the first network element may determine, based on the information about the domain name, that the first domain name is not authorized in the visited network of the terminal, for example, determine, based on a case in which the first domain name does not belong to the first domain name set and/or based on a case in which the first domain name belongs to the second domain name set, that the first domain name is not authorized in the visited network of the terminal, so that when querying the DNS server for the address of the AS corresponding to the first domain name, the first network element provides the information about the home network for the DNS server. In this way, the DNS server can accurately obtain the address of the AS corresponding to the first domain name and feed back the address to the terminal.

According to a second aspect, a communication method is provided. The method may be performed by a communication apparatus, and the communication apparatus may be a communication device or may be a component (such as a chip or a chip system) configured in a communication device. The following uses an example in which a second network element performs the method for description.

The method includes: The second network element sends first information to a terminal, where the first information indicates that a first network element is configured to discover an application server that provides a service for the terminal, and the first network element and the second network element are in a visited network of the terminal; and the second network element sends second information to the first network element, where the second information indicates a rule used for a query message that is from the terminal and that is used to query an address of the application server, and the rule includes: When the query message used to query the address of the application server includes a domain name that is not authorized in the visited network of the terminal, the first network element provides information about a home network of the terminal for a DNS server.

For example, that the first domain name is not authorized in the visited network of the terminal includes: A service corresponding to the first domain name is not authorized by a home network of the terminal to be offloaded to a local data network.

According to the foregoing solution, the second network element may indicate, to the first network element, a rule used to handle a DNS query message, and the rule includes: when an obtained query message includes a domain name that is not authorized in a serving network, providing the information about the home network for the DNS server, so that the first network element may handle the DNS query message according to the rule. In this way, the DNS server may obtain the information about the home network of the terminal, obtain, based on the first domain name, the information about the home network of the terminal, and address affinity, an address of an AS corresponding to the first domain name, and provide the address of the AS corresponding to the first domain name for the terminal, so that the terminal can access the application server in the serving network and obtain a service provided by the application server. In addition, this can avoid a problem that the terminal cannot access a service corresponding to a domain name because the domain name is not authorized, and improve quality of a communication service of the terminal.

With reference to the second aspect, in some implementations of the second aspect, the rule specifically includes: When the query message used to query the address of the application server includes the domain name that is not authorized in the visited network of the terminal, the first network element includes the information about the home network and the unauthorized domain name in one message, and provides the message for the DNS server.

For beneficial effects of a solution that is in the second aspect and that corresponds to a solution in the first aspect, refer to descriptions of the first aspect. Details are not described herein again.

With reference to the second aspect, in some implementations of the second aspect, the method further includes: The second network element receives third information from a third network element, where the third network element is in the home network of the terminal, the third information includes the information about the home network of the terminal, and the information about the home network is used to query an application server corresponding to the domain name that is not authorized in the visited network of the terminal.

With reference to the second aspect, in some implementations of the second aspect, the information about the home network includes an internet protocol IP address of the terminal, an IP address of a user plane function network element in the home network, or a dedicated address of the home network.

With reference to the second aspect, in some implementations of the second aspect, the first network element is a function network element that is in the visited network of the terminal and that is configured to discover an application server, and the second network element is a function network element that is in the visited network of the terminal and that is configured to manage a session of the terminal.

With reference to the second aspect, in some implementations of the second aspect, the method further includes: The second network element sends, to the first network element, information about a domain name authorized in the visited network of the terminal and/or information about a domain name that is not authorized in the visited network of the terminal.

With reference to the second aspect, in some implementations of the second aspect, the information about the domain name includes a first domain name set, the first domain name set includes one or more domain names authorized in the visited network of the terminal, and the first domain name does not belong to the first domain name set; and/or the information about the domain name includes a second domain name set, the second domain name set includes one or more domain names that are not authorized in the visited network of the terminal, and the first domain name belongs to the second domain name set.

According to a third aspect, a communication method is provided. The method may be performed by a communication apparatus, and the communication apparatus may be a communication device or may be a component (such as a chip or a chip system) configured in a communication device. The following uses an example in which a first network element performs the method for description.

The method includes: The first network element receives a first query message from a terminal, where the first query message includes information about a first domain name, and the first domain name is not authorized in a visited network of the terminal; and the first network element sends a second query message to a second network element, where the second query message includes the information about the first domain name, a destination address of the second query message is an address of a domain name system DNS server, the DNS server is configured to query, for the terminal, an address of an application server corresponding to a domain name that is not authorized in the visited network of the terminal, and the application server is configured to provide the terminal with a service corresponding to the first domain name.

For example, the address of the DNS server is an address of a DNS server corresponding to a home network, or the address of the DNS server is a DNS server in a central data network.

For example, that the first domain name is not authorized in the visited network of the terminal includes: The service corresponding to the first domain name is not authorized by the home network of the terminal to be offloaded to a local data network.

According to the foregoing solution, when the first network element in the visited network of the terminal provides an AS discovery service for the terminal, if the first domain name provided when the terminal queries an address of an AS is a domain name that is not authorized in the visited network, the first network element provides the second network element with a query message that includes the unauthorized domain name and whose destination address is the address of the DNS server. The second network element transfers the query message, so that a network element in a network may transfer, based on the destination address of the query message, the query message to the DNS server that can find the address of the AS corresponding to the domain name that is not authorized in the visited network of the terminal. In this way, the terminal can obtain, in the serving network, an address of an application server corresponding to a domain name that is not authorized to offload a corresponding service to a local data network, so that the terminal can access the application server in the serving network and obtain a service provided by the application server. In addition, this can avoid a problem that the terminal cannot access a service corresponding to a domain name because the domain name is not authorized, and improve quality of a communication service of the terminal.

With reference to the third aspect, in some implementations of the third aspect, the first network element receives the address of the application server from the second network element.

According to the foregoing solution, after finding the address of the AS corresponding to the domain name that is not authorized in the visited network of the terminal, the DNS server may specifically feed back the address of the AS to the terminal via the second network element and the first network element that transfer the query message to the terminal, so that the terminal can obtain the address of the AS.

With reference to the third aspect, in some implementations of the third aspect, the method further includes: The first network element receives information from the second network element, where the information indicates a rule used for a query message that is from the terminal and that is used to query an address of an application server, and the rule includes: When the query message used to query the address of the application server includes a domain name that is not authorized in the visited network of the terminal, the first network element sends, to the second network element, the query message that includes the unauthorized domain name and whose destination address is the address of the DNS server.

In an implementation, the method further includes: The first network element receives information from the second network element, where the information indicates a rule used for the first query message, and the rule includes: The first network element provides the second network element with the second query message that includes the first domain name and whose destination address is the address of the DNS server.

According to the foregoing solution, the second network element may indicate, to the first network element, a rule used to handle a DNS query message, so that the first network element can transfer, to the second network element according to the rule, the query message that includes the unauthorized domain name and whose destination address is the address of the DNS server, and the query message is finally transferred to the DNS server.

With reference to the third aspect, in some implementations of the third aspect, the first network element is a function network element that is in the visited network of the terminal and that is configured to discover an application server, and the second network element is a function network element that is in the visited network of the terminal and that is configured to manage a session of the terminal.

With reference to the third aspect, in some implementations of the third aspect, that the first network element receives the address of the application server from the second network element includes: The first network element receives, from the second network element, a second response message for the second query message, where the second response message includes the address of the application server; and the method further includes: The first network element sends, to the terminal, a first response message for the first query message, where the first response message includes the address of the application server.

With reference to the third aspect, in some implementations of the third aspect, the method further includes: The first network element obtains information about a domain name authorized in the visited network of the terminal and/or information about a domain name that is not authorized in the visited network of the terminal; and the first network element determines, based on the information about the domain name, that the first domain name is not authorized in the visited network of the terminal.

With reference to the third aspect, in some implementations of the third aspect, the information about the domain name includes a first domain name set and/or a second domain name set, the first domain name set includes one or more domain names authorized in the visited network of the terminal, and the first domain name does not belong to the first domain name set. The second domain name set includes one or more domain names that are not authorized in the visited network of the terminal, and the first domain name belongs to the second domain name set.

According to a fourth aspect, a communication method is provided. The method may be performed by a communication apparatus, and the communication apparatus may be a communication device or may be a component (such as a chip or a chip system) configured in a communication device. The following uses an example in which a second network element performs the method for description.

The method includes: The second network element receives a second query message from a first network element, where the second query message includes information about a first domain name that is from a terminal, a destination address of the second query message is an address of a domain name system DNS server, the first domain name is not authorized in a visited network of the terminal, the DNS server is configured to query, for the terminal, an address of an application server corresponding to a domain name that is not authorized in the visited network of the terminal, the application server is configured to provide the terminal with a service corresponding to the first domain name, the second query message is used to query, for the terminal, the DNS server for an address of an application server corresponding to the first domain name, the first network element is a function network element that is in the visited network of the terminal and that is configured to manage a session of the terminal, and the second network element is a function network element that is in the visited network of the terminal and that is configured to discover an application server.

According to the foregoing solution, the second network element indicates, to the first network element, a rule used to handle a DNS query message, so that the first network element can transfer, to the second network element, that is, a control plane network element that is in the visited network of the terminal and that is configured to manage a session of the terminal, a query message that includes the unauthorized domain name and whose destination address is the address of the DNS server according to the rule, and the control plane network element in the visited network of the terminal transfers the query message. In this way, a network element in a network may transfer, based on the destination address of the query message, the query message to the DNS server that can find an address of an AS corresponding to the domain name that is not authorized in the visited network of the terminal. In addition, in this solution, even if the terminal performs encryption protection on the query message, the first network element configured to discover an AS can determine whether a domain name included in the query message is a domain name that is not authorized in the visited network, and the first network element transfers the query message according to the rule, so that the terminal obtains an address of an AS corresponding to the domain name. In this way, the terminal can obtain, in a serving network, an address of an application server corresponding to a domain name that is not authorized to offload a corresponding service to a local data network, so that the terminal can access the application server in the serving network and obtain a service provided by the application server. In addition, this can avoid a problem that the terminal cannot access a service corresponding to a domain name because the domain name is not authorized, and improve quality of a communication service of the terminal.

With reference to the fourth aspect, in some implementations of the fourth aspect, the second network element queries, for the terminal via a network element in a home network of the terminal, the DNS server for the address of the application server corresponding to the first domain name.

For example, the second network element sends a third query message to a third network element, where the third query message is used to query, for the terminal, the DNS server for the address of the application server corresponding to the first domain name, the third query message includes the information about the first domain name, and the third network element is a function network element that is in the home network and that is configured to manage a session of the terminal.

According to the foregoing solution, the control plane network element in the visited network of the terminal transfers the query message, so that the query message can be transferred to the home network of the terminal, and transferred, through the home network, to the DNS server that can find the address of the AS corresponding to the first domain name. In this way, the terminal obtains, in the serving network, an address of an application server corresponding to a domain name that is not authorized to offload a corresponding service to a local data network.

With reference to the fourth aspect, in some implementations of the fourth aspect, the method further includes:
The second network element sends information to the first network element, where the information indicates a rule used for a query message that is from the terminal and that is used to query an address of an application server, and the rule includes: When the query message used to query the address of the application server includes a domain name that is not authorized in the visited network of the terminal, the first network element sends, to the second network element, the query message that includes the unauthorized domain name and whose destination address is the address of the DNS server.

In an implementation, the second network element sends information to the first network element, where the information indicates a rule used for the first query message, and the rule includes: The first network element provides the second network element with the second query message that includes the first domain name and whose destination address is the address of the DNS server.

For beneficial effects of a solution that is in the fourth aspect and that corresponds to a solution in the third aspect, refer to descriptions of the third aspect. Details are not described herein again.

With reference to the fourth aspect, in some implementations of the fourth aspect, the response message that includes the address of the AS corresponding to the first domain name may be transferred to the terminal via the first network element, the second network element, and the third network element that transfer the query message, that is, may be transferred to the terminal via control plane network elements that transfer the query message.

Specifically, the second network element receives a third response message from a third network element, where the third response message includes the address of the application server corresponding to the first domain name, and the third network element is a function network element that is in the home network and that is configured to manage a session of the terminal; and the method further includes: The second network element sends, to the first network element, a second response message for the second query message, where the second response message includes the address of the application server corresponding to the first domain name.

With reference to the fourth aspect, in some implementations of the fourth aspect, the response message that includes the address of the AS corresponding to the first domain name may be transferred to the terminal via a user plane network element in the home network and a user plane network element in the visited network of the terminal.

According to a fifth aspect, a communication method is provided. The method may be performed by a communication apparatus, and the communication apparatus may be a communication device or may be a component (such as a chip or a chip system) configured in a communication device. The following uses an example in which a second network element performs the method for description.

The method includes: The second network element sends first information to a terminal, where the first information indicates that a first network element is configured to discover an application server that provides a service for the terminal, the first network element is a function network element that is in a visited network of the terminal and that is configured to manage a session of the terminal, and the second network element is a function network element that is in the visited network and that is configured to discover an application server; and the second network element sends second information to the first network element, where the second information indicates a rule used for a first query message that is from the terminal and that is used to query an address of an application server, and the rule includes: When the first query message includes a domain name that is not authorized in the visited network, the first network element sends, to the second network element, a second query message that includes the unauthorized domain name and whose destination address is an address of a DNS server, where the DNS server is configured to query, for the terminal, an address of an application server corresponding to the domain name that is not authorized in the visited network.

For beneficial effects of a solution in the fifth aspect, refer to descriptions of beneficial effects of a corresponding solution in the third aspect and the fourth aspect. Details are not described herein again.

According to a sixth aspect, a communication method is provided. The method may be performed by a communication apparatus, and the communication apparatus may be a communication device or may be a component (such as a chip or a chip system) configured in a communication device. The following uses an example in which a first network element performs the method for description.

The method includes: A fourth network element receives a first query message, where the first query message includes information about a first domain name that is from a terminal, and the first domain name is not authorized in a visited network of the terminal; and the fourth network element sends a fourth query message, where the fourth query message includes the information about the first domain name, a destination address of the fourth query message is an address of a domain name system DNS server, the DNS server is configured to query, for the terminal, an address of an application server corresponding to a domain name that is not authorized in the visited network of the terminal, and the application server is configured to provide the terminal with a service corresponding to the first domain name.

For example, the fourth network element is a function network element that is in the visited network of the terminal and that is configured to manage a session of the terminal, a function network element that is in a home network and that is configured to manage a session of the terminal, a user plane function network element in the home network, or a function network element that is in the home network and that is configured to discover an application server.

For example, that the first domain name is not authorized in the visited network of the terminal includes: A service corresponding to the first domain name is not authorized by the home network to be offloaded to a local data network.

According to the foregoing solution, when the fourth network element obtains a domain name that is not authorized in the visited network from the first terminal, the fourth network element transfers a query message that includes the unauthorized domain name and whose destination address is the address of the DNS server. In this way, a network element in a network may transfer, based on the destination address of the query message, the query message to the DNS server that can find an address of an AS corresponding to the domain name that is not authorized in the visited network of the terminal. In this way, the terminal can obtain, in a serving network, an address of an application server corresponding to a domain name that is not authorized to offload a corresponding service to the local data network, so that the terminal can access the application server in the serving network and obtain a service provided by the application server. In addition, this can avoid a problem that the terminal cannot access a service corresponding to a domain name because the domain name is not authorized, and improve quality of a communication service of the terminal.

With reference to the sixth aspect, in some implementations of the sixth aspect, the fourth network element receives the address of the application server.

With reference to the sixth aspect, in some implementations of the sixth aspect, the fourth network element is a function network element that is in the visited network of the terminal and that is configured to manage a session of the terminal, and sending the fourth query message includes: sending the fourth query message to a function network element that is in the home network and that is configured to manage a session of the terminal.

With reference to the sixth aspect, in some implementations of the sixth aspect, the fourth network element is a function network element that is in the visited network of the terminal and that is configured to manage a session of the terminal, and the method further includes: The fourth network element sends information to the first network element, where the first network element is a network element that is in the visited network of the terminal and that is configured to discover an application server, the information indicates a rule used for a query message that is from the terminal and that is used to query an address of an application server, and the rule includes: When the query message used to query the address of the application server includes a domain name that is not authorized in the visited network of the terminal, the first network element sends, to the second network element, the query message used to query the address of the application server.

With reference to the sixth aspect, in some implementations of the sixth aspect, that the fourth network element receives the address of the application server includes: The fourth network element receives a fourth response message for the fourth query message, where the fourth response message includes the address of the application server; and the fourth network element sends, to the terminal, a first response message for the first query message, where the first response message includes the address of the application server.

According to a seventh aspect, a communication method is provided. The method may be performed by a communication apparatus, and the communication apparatus may be a communication device or may be a component (such as a chip or a chip system) configured in a communication device. The following uses an example in which a terminal performs the method for description.

The method includes: The terminal determines that a to-be-queried first domain name is not authorized in a visited network, and the terminal determines a first message, where the first message includes a query message and indication information, the query message is used to query an address of an application server corresponding to the first domain name, and the indication information indicates that the query message is used to query an address of an AS corresponding to a domain name that is not authorized in the visited network, or the indication information indicates that the query message includes a domain name that is not authorized in the visited network; and the terminal sends the first message to a user plane function network element in the visited network.

According to the foregoing solution, the terminal notifies, based on the indication information, the user plane network element that the query message includes the domain name that is not authorized in the visited network, so that even if the terminal performs encryption protection (such as DHO and DOT) on the query message, although the user plane function network element cannot interpret the query message, the user plane function network element can determine, based on the indication information in the first message, to transfer the query message to a UPF network element in a home network without interpreting the query message, so that the UPF network element in the home network can find, for the terminal, an address of an AS corresponding to the domain name that is not authorized in the visited network. In this way, the terminal can access, in the visited network, the address of the application server corresponding to the unauthorized domain name, and obtain a service provided by the application server. In addition, this can avoid a problem that the terminal cannot access a service corresponding to a domain name because the domain name is not authorized, and improve quality of a communication service of the terminal.

According to an eighth aspect, a communication method is provided. The method may be performed by a communication apparatus, and the communication apparatus may be a communication device or may be a component (such as a chip or a chip system) configured in a communication device. The following uses an example in which a terminal performs the method for description.

The method includes: A first user plane function network element receives a first message from the terminal, where the first message includes a query message and indication information, the query message is used to query an address of an application server corresponding to a first domain name, the indication information indicates that the query message is used to query an address of an AS corresponding to a domain name that is not authorized in a visited network, or the indication information indicates that the query message includes a domain name that is not authorized in a visited network, and the first user plane function network element is in the visited network of the terminal; and the first user plane function network element sends the query message to a second user plane function network element, where the second user plane function network element is in a home network of the terminal.

For beneficial effects of a solution in the eighth aspect, refer to descriptions of beneficial effects of a solution in the seventh aspect. Details are not described herein again.

According to a ninth aspect, a communication method is provided. The method may be performed by a communication system, and the communication system includes a first network element and a second network element.

The method includes: The second network element sends first information to a terminal, where the first information indicates that the first network element is configured to discover an application server that provides a service for the terminal, the first network element and the second network element are in a visited network of the terminal, and the first network element and the second network element are in the visited network of the terminal.

The second network element sends second information to the first network element, where the second information indicates a rule used for a query message that is from the terminal and that is used to query an address of the application server, and the rule includes: When the query message used to query the address of the application server includes a domain name that is not authorized in the visited network of the terminal, the first network element provides information about a home network of the terminal for a DNS server.

The first network element receives a first query message from the terminal, where the first query message includes information about a first domain name, and the first domain name is not authorized in the visited network of the terminal.

The first network element sends a second query message to the domain name system DNS server, where the second query message includes the information about the first domain name and the information about the home network of the terminal, the information about the home network is used to determine an address of an application server, and the application server is configured to provide the terminal with a service corresponding to the first domain name.

The first network element receives the address of the application server from the DNS server, and the first network element sends the address of the application server to the terminal.

With reference to the ninth aspect, in some implementations of the ninth aspect, the communication system further includes the foregoing terminal.

According to a tenth aspect, a communication method is provided. The method may be performed by a communication system, and the communication system includes a first network element and a second network element.

The method includes: The first network element receives a first query message from a terminal, where the first query message includes information about a first domain name, and the first domain name is not authorized in a visited network of the terminal.

The first network element sends a second query message to a second network element, where the second query message includes the information about the first domain name, a destination address of the second query message is an address of a domain name system DNS server, the DNS server is configured to query, for the terminal, an address of an application server corresponding to a domain name that is not authorized in the visited network of the terminal, and the application server is configured to provide the terminal with a service corresponding to the first domain name.

The second network element queries, for the terminal via a network element in a home network of the terminal, the DNS server for an address of an application server corresponding to the first domain name.

The first network element receives the address of the application server from the second network element.

The first network element sends the address of the application server to the terminal.

According to an eleventh aspect, a communication apparatus is provided. The apparatus may include modules configured to perform methods/operations/steps/actions described in any one of the first aspect to the eighth aspect and the possible implementations of the first aspect to the eighth aspect in a one-to-one correspondence. The modules may be hardware circuits or software, or may be implemented by a hardware circuit in combination with software. For details, refer to detailed descriptions in the foregoing corresponding method examples. Details are not described herein again.

According to a twelfth aspect, a communication apparatus is provided, including a processor. The processor is coupled to a memory, and may be configured to execute instructions in the memory, to implement the method in any one of the first aspect to the eighth aspect and the possible implementations of the first aspect to the eighth aspect.

Optionally, the communication apparatus further includes the memory.

Optionally, the communication apparatus further includes a communication interface, and the processor is coupled to the communication interface. In this application, the communication interface may be a transceiver, a pin, a circuit, a bus, a module, or a communication interface of another type. This is not limited.

In an implementation, the communication apparatus is a communication device. When the communication apparatus is the communication device, the communication interface may be a transceiver, or the communication interface may be an input/output interface.

Optionally, the transceiver may be a transceiver circuit. Optionally, the input/output interface may be an input/output circuit.

In another implementation, the communication apparatus is a chip configured in a communication device. When the communication apparatus is the chip configured in the communication device, the communication interface may be an input/output interface.

According to a thirteenth aspect, a processor is provided, including an input circuit, an output circuit, and a processing circuit. The processing circuit is configured to: receive a signal through the input circuit, and transmit a signal through the output circuit, so that the processor performs the method in any one of the first aspect to the eighth aspect and the possible implementations of the first aspect to the eighth aspect.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and various circuits are not limited in this application.

According to a fourteenth aspect, a computer program product is provided. The computer program product includes a computer program (which may also be referred to as code or an instruction). When the computer program is run, a computer is enabled to perform the method in any one of the first aspect to the eighth aspect and the possible implementations of the first aspect to the eighth aspect.

According to a fifteenth aspect, a computer-readable storage medium is provided. The computer-readable storage medium stores a computer program (which may also be referred to as code or an instruction). When the computer program is run on a computer, the computer is enabled to perform the method in any one of the first aspect to the eighth aspect and the possible implementations of the first aspect to the eighth aspect.

According to a sixteenth aspect, this application provides a communication system. The communication system includes a first communication apparatus and a second communication apparatus, the first communication apparatus is configured to perform the method performed by the first network element in any one of the first aspect to the eighth aspect and the possible implementations of the first aspect to the eighth aspect, and the second communication apparatus is configured to perform the method performed by the second network element in any one of the first aspect to the eighth aspect and the possible implementations of the first aspect to the eighth aspect.

In an implementation, the communication system further includes a terminal configured to perform the method in any one of the first aspect to the eighth aspect and the possible implementations of the first aspect to the eighth aspect.

### BRIEF DESCRIPTION OF DRAWINGS

FIG. 1 is a diagram of an architecture of a communication system according to an embodiment of this application;
FIG. 1A is another diagram of an architecture of a communication system according to an embodiment of this application;
FIG. 2 is a schematic flowchart of a communication method according to an embodiment of this application;
FIG. 3 is a schematic flowchart of a communication method applied to a terminal roaming scenario according to an embodiment of this application;
FIG. 4 is another schematic flowchart of a communication method according to an embodiment of this application;
FIG. 5 is another schematic flowchart of a communication method applied to a terminal roaming scenario according to an embodiment of this application;
FIG. 6 is a block diagram of a communication apparatus according to an embodiment of this application; and
FIG. 7 is another diagram of a structure of a communication apparatus according to an embodiment of this application.

### DESCRIPTION OF EMBODIMENTS

The following describes technical solutions of this application with reference to accompanying drawings.

In embodiments of this application, "/" may represent an "or" relationship between associated objects, for example, A/B may represent A or B; and "and/or" may represent that there are three relationships between associated objects, for example, A and/or B may represent the following three cases: Only A exists, both A and B exist, and only B exists, where A and B may be singular or plural. For ease of describing the technical solutions in embodiments of this application, words such as "first" and "second" may be used for differentiation in embodiments of this application. The words such as "first" and "second" do not limit a quantity and an execution sequence, and the words such as "first" and "second" do not limit a definite difference. In embodiments of this application, the word such as "example" or "for example" represents an example, evidence, or a description. Any embodiment or design solution described as "example" or "for example" should not be explained as being more preferred or having more advantages than another embodiment or design solution. The word such as "example" or "for example" is used to present a related concept in a specific manner for ease of understanding. In embodiments of this application, "at least one (type)" may alternatively be described as "one (type) or more (types)", and "a plurality of (types)" may be two (types), three (types), four (types), or more (types). This is not limited in embodiments of this application.

The technical solutions in embodiments of this application may be applied to various communication systems, for example, a long term evolution (long term evolution, LTE) system, a 5th generation (5th generation, 5G) communication system, for example, a 5G new radio (new radio, NR) system, a 6th generation (6th generation, 6G) communication system, a future communication system, a system integrating a plurality of communication systems, or the like. This is not limited in embodiments of this application.

A terminal device in embodiments of this application may also be referred to as a terminal. The terminal may be a device having a wireless transceiver function. The terminal may be deployed on land, including being deployed indoor, outdoor, handheld, and/or vehicle-mounted, may be deployed on a water surface (for example, on a ship), or may be deployed in the air (for example, on an airplane, a balloon, or a satellite). The terminal device may be user equipment (user equipment, UE). The UE includes a handheld device, vehicle-mounted device, wearable device, or computing device with a wireless communication function. For example, the UE may be a mobile phone (mobile phone), a tablet computer, or a computer having a wireless transceiver function. The terminal device may alternatively be a virtual reality (virtual reality, VR) terminal device, an augmented reality (augmented reality, AR) terminal device, a wireless terminal in industrial control, a wireless terminal in self driving, a wireless terminal in telemedicine, a wireless terminal in a smart grid, a wireless terminal in a smart city (smart city), a wireless terminal in a smart home (smart home), and/or the like.

A radio access network (radio access network, RAN) network element in embodiments of this application may be a RAN device, including a base station (base station, BS), or may be a device that is deployed in a radio access network and that can perform wireless communication with a terminal device. The base station may be in a plurality of forms. For example, the base station may be a macro base station, a micro base station, a relay station, or an access point. A base station in embodiments of this application may be a next generation radio access network (next generation-RAN, NG-RAN) device in a 5G system, a base station in a long term evolution (long term evolution, LTE) system, or a base station in another system. This is not limited. The NG-RAN device in the 5G system may also be referred to as a transmission reception point (transmission reception point, TRP) or a next generation network element B (generation NodeB, gNB or gNodeB). The base station may be an integrated base station, or may be a base station that is separated into a plurality of network elements. This is not limited. For example, the base station is a base station in which a central unit (central unit, CU) and a distributed unit (distributed unit, DU) are separated, that is, the base station includes the CU and the DU.

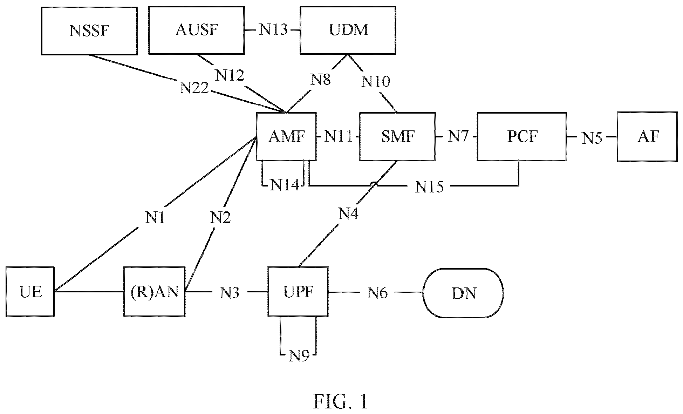

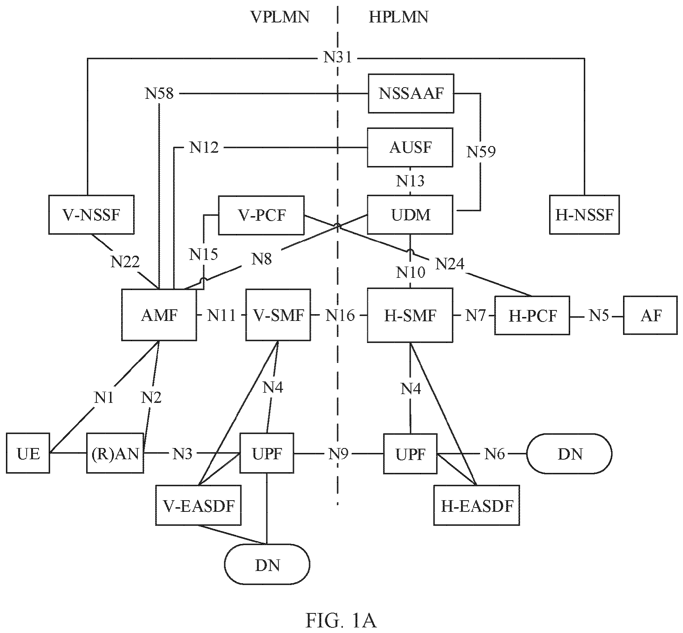

FIG. 1 is a diagram of a network architecture to which an embodiment of this application is applicable. As shown in FIG. 1, the network architecture may include UE, an access network element (for example, (R)AN) in an access network, and a core network element in a core network. The core network may include a plurality of functional units shown in FIG. 1, for example, an access and mobility management function (access and mobility management function, AMF) network element, a session management function (session management function, SMF) network element, a user plane function (user plane function, UPF) network element, an authentication server function (authentication server function, AUSF) network element, a policy control function (policy control function, PCF) network element, an application function (application function, AF) network element, a unified data management function (unified data management, UDM) network element, and a network slice selection function (network slice selection function, NSSF) network element. The following separately describes function network elements.

The AMF network element is mainly responsible for services such as mobility management and access management, for example, user location update, user network registration, and user switching.

The SMF network element is mainly responsible for session management, terminal device address management and assignment, a dynamic host configuration protocol function, selection and control of a user plane function, and the like. The SMF network element is mainly responsible for session management in a mobile network, for example, session establishment, modification, and release. Specific functions of the SMF network element include, for example, allocating an IP address to a user or selecting a UPF that provides a packet forwarding function.

FIG. 1A shows a diagram of an HR roaming network architecture to which an embodiment of this application is applicable. In an HR roaming scenario, an SMF network element in a home network of a terminal may be denoted as an H-SMF network element, and an SMF network element in a visited network of the terminal may be denoted as a V-SMF network element. The V-SMF network element and the H-SMF network element may exchange information through an interface 16 (denoted as N16).

The UPF network element is mainly responsible for an external connection to a data network (data network, DN), user plane data packet routing and forwarding, packet filtering, performing functions related to quality of service (quality of service, QoS) control, and the like. A UPF network element directly connected to the DN through N6 in a session is referred to as a protocol data unit (protocol data unit, PDU) session anchor (PDU session anchor, PSA). Specifically, the core network may include a UPF network element connected to a DNS server (which may be referred to as a central DNS server) in a central data network (Central DN), and the UPF network element may be specifically referred to as a center PSA (center PSA, C-PSA). The core network may also include a UPF network element connected to a DNS server in a local data network (Local part of DN), and the UPF network element may be specifically referred to as a local PSA (local PSA, L-PSA). The local data network is a group of network entities deployed in the local data network, or the local data network means that a data network is deployed locally.

In the HR roaming scenario, as shown in FIG. 1A, a UPF network element in the home network of the terminal may be denoted as an H-UPF network element, and a UPF network element in the visited network of the terminal may be denoted as a V-UPF network element. The V-UPF network element and the H-UPF network element may exchange information through an interface 9 (denoted as N9).

The UDM network element is mainly responsible for storing subscription data, a credential (credential), a subscriber permanent identifier (SUPI, Subscriber Permanent Identifier), and the like of a subscribed terminal device in a network, and a service-based interface exhibited by the UDM network element is Nudm. The data may be used for authentication and authorization for a terminal device to access an operator network.

The AUSF network element is mainly responsible for authenticating a terminal device, and the like.

The PCF network element is mainly responsible for providing a unified policy framework for network behavior management, providing a policy rule for a control plane function, obtaining registration information related to policy decision, and the like, and a service-based interface exhibited by the PCF network element is Npcf.

In the HR roaming scenario, as shown in FIG. 1A, a PCF network element in the home network of the terminal may be denoted as an H-PCF network element, and a UPF network element in the visited network of the terminal may be denoted as a V-PCF network element. The V-PCF network element and the H-PCF network element may exchange information through an interface 24 (denoted as N24).

The NSSF network element is mainly responsible for selecting, by using a network slicing technology, a network slice instance set that provides a service for UE, and slicing one physical network into a plurality of logical networks for multiple purposes, to provide a personalized network service for a user.

In the HR roaming scenario, an NSSF network element in the home network of the terminal may be denoted as an H-NSSF network element, and an NSSF network element in the visited network of the terminal may be denoted as a V-NSSF network element. The V-NSSF network element and the H-NSSF network element may exchange information through an interface 58 (denoted as N31).

It should be noted that the foregoing functional networks may work independently, or may be combined to implement some control functions, for example, implement access control and mobility management functions such as access authentication, security encryption, and location registration for the terminal device, and implement session management functions such as establishment, release, and change of a user plane transmission path.

Function network elements shown in FIG. 1 may communicate with each other through a network interface. For example, UE may transmit a control plane message to the AMF network element through an interface 1 (denoted as N1), the RAN network element may establish a user plane data transmission channel with the UPF network element through an interface 3 (denoted as N3), the RAN network element may establish a control plane signaling connection to the AMF network element through an interface 2 (denoted as N2), the UPF may exchange information with the SMF network element through an interface 4 (denoted as N4), the UPF network element may exchange user plane data with the data network DN through an interface 6 (denoted as N6), different UPF network elements may exchange information with each other through an interface N9, the AMF network element may exchange information with the SMF network element through an interface 11 (denoted as N11), the SMF network element may exchange information with the PCF network element through an interface 7 (denoted as N7), and the AMF network element may exchange information with the AUSF network element through an interface 12 (denoted as N12). It should be noted that FIG. 1 is merely an example architectural diagram, and in addition to the functional units shown in FIG. 1, the network architecture may further include other functional units. This is not limited in this application.

In an edge computing (edge computing, EC) deployment scenario, some services may be provided by a plurality of edge application servers (edge application server, EAS) deployed at a network edge. When a terminal needs to access these services, the terminal is required to access an available EAS closest to the terminal in an EC scenario. Therefore, the terminal needs to obtain a network protocol (internet protocol, IP) address of an appropriate EAS. The terminal may obtain the network protocol address via an edge application server discovery function EASDF network element that is in a network and that is configured to assist the terminal in discovering an EAS. The EASDF network element mainly handles a domain name system (DNS) message based on an indication of the SMF network element, and handling operations include: receiving a DNS query (DNS query) message that includes a fully qualified domain name (full qualified domain name, FQDN) and that is from UE, and reporting the FQDN in the DNS query message to the SMF network element. In addition, the EASDF network element receives, from the SMF network element, information to build extended mechanisms for DNS-client-subnet (extended mechanisms for DNS-client-subnet, ECS) option (the information is denoted as info to build ECS option), and adds an ECS option information element to the DNS query based on the information to build ECS option. The EASDF network element sends a handled DNS query to a DNS server, receives a DNS response message from the DNS server, to obtain an IP address of an EAS corresponding to the FQDN queried by the UE, and sends the IP address to the UE.

When the terminal roams within a VPLMN, an HPLMN may authorize services corresponding to one or more FQDNs to be offloaded to a local data network of the VPLMN. However, for an FQDN that is not authorized by the HPLMN to offload a service to the local data network of the VPLMN, quality of a service that can be obtained by the terminal from the FQDN may be limited. For example, when roaming within the VPLMN, the terminal may fail to access a service corresponding to a domain name that is not authorized to be offloaded to the local data network of the VPLMN.

For the foregoing problem, embodiments of this application provide a corresponding solution. A function network element used to discover an application server (application server, AS) may obtain information about the home network of the terminal, and provide the information about the home network of the terminal for the DNS server when providing an AS discovery service for the terminal, so that the DNS server can find an address of an AS corresponding to a domain name that is not authorized to offload a service to a local DN of a serving network of the terminal. Then, the function network element used to discover the AS provides the address for the terminal. In this way, the terminal can obtain, in the serving network, the address of the AS corresponding to the domain name that is not authorized to offload the service to the local DN of the serving network of the terminal, and the terminal can access a service required by the terminal. This improves communication quality of the terminal.

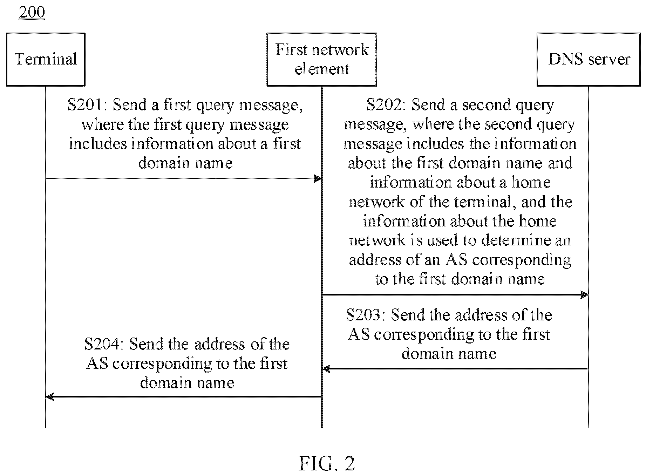

FIG. 2 is a schematic flowchart of a communication method 200 according to an embodiment of this application. In the communication method 200, a serving network of the terminal may be a visited network, that is, the terminal roams within the visited network. Alternatively, the serving network of the terminal may be an intermediate network whose PLMN is the same as a PLMN of the home network of the terminal. The intermediate network may be understood as a network including an intermediate network element that provides a service for the terminal. For example, an intermediate session management function (I-SMF, Intermediate SMF) network element provides a session management service for the terminal. According to the method 200, the terminal can find an address of an AS corresponding to a domain name that is not authorized in the visited network or the serving network, and access the AS in the visited network or the intermediate network. Alternatively, the serving network may be the home network of the terminal. For example, in the embodiment shown in FIG. 2, the terminal needs to query an address of an AS that does not cooperate with the home network of the terminal, or in other words, the AS cooperates with another operator network other than the home network of the terminal. According to the method 200, the terminal can find an address of the AS, and access the AS that does not cooperate with the home network. The following mainly uses an example in which the serving network of the terminal is the visited network of the terminal for description. It should be understood that this application is not limited thereto, and the serving network may alternatively be the foregoing intermediate network or the home network.

A first network element is a function network element that is in a current serving network of the terminal and that is configured to discover an AS. For example, the first network element may be referred to as an edge application server discovery function EASDF network element or an application server discovery function ASDF network element. The method 200 includes but is not limited to the following steps.

S201: The terminal sends a first query message to the first network element, where the first query message includes information about a first domain name.

The first query message is used to query an address of an AS corresponding to the first domain name, and the AS is configured to provide a service for the terminal.

The first network element receives the first query message from the terminal. The first network element determines that the terminal queries the address of the AS corresponding to the first domain name. The information about the first domain name that is in the first query message may be the first domain name. For example, the first domain name may be a fully qualified domain name (full qualified domain name, FQDN). Alternatively, the information about the first domain name may be an identifier of the first domain name. The information about the first domain name is used by the first network element to determine the first domain name. A specific implementation form of the information about the first domain name is not limited in this application. It should be understood that the first domain name may also be described as service information, that is, the service information may be represented by using a domain name, the service information may be represented by using a uniform resource identifier (uniform resource identifier, URI)/uniform resource locator (uniform resource locator, URL), or the service information may be represented by using an application identifier. This is not limited in this application, and the domain name is only used as an example for description in this application.

The first network element may determine that the first domain name is not authorized in the serving network. In this application, that a domain name is not authorized in the serving network of the terminal includes: A service corresponding to the domain name is not authorized by a home network of the terminal to be offloaded to a local DN, and that a domain name is authorized in the serving network of the terminal includes: A service corresponding to the domain name is authorized by the home network of the terminal to be offloaded to the local DN. The local DN is a DN deployed locally and/or deployed in a distributed manner. The local DN may be accessed by a network element in the visited network, or in other words, the terminal may access the local DN via the visited network. For example, that the first domain name is not authorized in the serving network of the terminal includes: A service corresponding to the first domain name is not authorized by the home network of the terminal to be offloaded to the local DN.

In an optional implementation, the first network element may obtain information about a domain name authorized in the serving network and/or information about a domain name that is not authorized in the serving network; and the first network element determines, based on the information about the domain name, that the first domain name is not authorized in the serving network.

In an example, the first network element obtains the information about the domain name authorized in the serving network, where the information about the domain name may include a first domain name set, and the first domain name set includes one or more domain names authorized in the serving network; and the first network element may determine, based on a case in which the first domain name does not belong to the first domain name set, that the first domain name is a domain name that is not authorized in the serving network.

In another example, the first network element obtains the information about the domain name that is not authorized in the serving network, where the information about the domain name may include a second domain name set, and the first network element obtains the information about the domain name authorized in the serving network and the information about the domain name that is not authorized in the serving network. The first domain name set includes one or more domain names that are not authorized in the serving network. The first network element may determine, based on a case in which the first domain name belongs to the second domain name set, that the first domain name is a domain name that is not authorized in the serving network.

In still another example, the information about the domain name may include both the first domain name set and the second domain name set. In this case, the first network element determines, based on a case in which the first domain name does not belong to the first domain name set and/or the first domain name belongs to the second domain name set, that the first domain name is a domain name that is not authorized in the serving network.

A manner in which the first network element obtains the information about the domain name may include but is not limited to the following manners.

In one manner, the first network element obtains the information about the domain name from configuration information of the first network element (for example, the configuration information stored in the first network element). In other words, the information about the domain name is configured in the first network element.

For example, before the first network element receives the first query message, a second network element may send the information about the domain name to the first network element, and the first network element stores the information about the domain name in the configuration information of the first network element. After receiving the first query message, the first network element obtains the information about the domain name from the configuration information.

In another manner, after the first network element receives the first query message, the first network element may send a request message to a second network element, where the request message is used to request the information about the domain name authorized in the serving network and/or the information about the domain name that is not authorized in the serving network. After receiving the request message, the second network element sends, to the first network element, the information about the domain name that is requested by the request message. The first network element determines, based on the information about the domain name, that the first domain name is not authorized in the serving network.

The second network element may be a function network element that is in the serving network of the terminal and that is configured to manage a session of the terminal, and the second network element may be referred to as a session management function SMF network element.

In an example, the serving network of the terminal may be the visited network of the terminal, the first network element is an EASDF network element in the visited network, namely, a V-EASDF network element, and the second network element is an SMF network element in the visited network, namely, a V-SMF network element. The V-SMF network element may send the information about the domain name to the V-EASDF network element. The information about the domain name may be included in VPLMN offloading information (VPLMN offloading info) sent by the V-SMF network element to the V-EASDF network element. For example, the information about the domain name may be service information that is in the VPLMN offloading information and that is authorized to be offloaded in the visited network (authorized traffic for Home Routed with Session Breakout in VPLMN) or a service information that is in the VPLMN offloading information and that is not authorized to be offloaded in the visited network (non-authorized traffic for Home Routed with Session Breakout in VPLMN). However, this application is not limited thereto.

In another optional implementation, after receiving the first query message, the first network element sends the first domain name to the second network element, the second network element determines that the first domain name is not authorized in the serving network based on the first domain name, and the information that is about the domain name authorized in the serving network and that is obtained by the second network element and/or the information that is about the domain name not authorized in the serving network and that is obtained by the second network element, and the second network element sends information about the home network of the terminal to the first network element. The information about the home network is used by the first network element to determine a second query message in S202.

In a manner, the first network element may determine, based on the obtained information about the home network of the terminal, that the first domain name is not authorized in the serving network.

In another manner, the first network element may not determine whether the first domain name is authorized in the serving network. After obtaining the information about the home network of the terminal from the second network element, the first network element determines, in S202, the second query message based on the first query message and the information about the home network of the terminal. S202: The first network element sends the second query message to a DNS server, where the second query message includes the information about the first domain name and the information about the home network of the terminal, and the information about the home network is used to determine the address of the AS corresponding to the first domain name.

The information about the home network of the terminal that is in the second query message may be considered as information used to obtain the address of the AS corresponding to the first domain name.

In S201, the first network element determines, based on the first query message, that the terminal queries the address of the AS corresponding to the first domain name that is not authorized in the serving network. In this case, the first network element adds, to the second query message, the information about the home network of the terminal that is obtained before the first network element receives the first query message and the information about the first domain name that is obtained based on the first query message, and sends the second query message to the DNS server. Alternatively, after receiving the first query message, the first network element sends the first domain name to the second network element, obtains the information about the home network from the second network element, and sends, to the DNS server, the second query message that includes the first domain name and the information about the home network of the terminal.

The first network element sends, to the DNS server, the second query message that includes the information about the home network of the terminal, so that the DNS server may determine, based on the information about the home network of the terminal that is in the second query message, the address of the AS corresponding to the first domain name that is not authorized in the serving network of the terminal, and the terminal can obtain, in the serving network (that is, the visited network or the intermediate network), the address of the AS corresponding to the first domain name that is not authorized in the serving network.

For example, the second query message includes an ECS option information element, and the ECS option information element indicates the information about the home network of the terminal.

The information about the home network of the terminal may be information that represents a location of the home network. For example, the information about the home network of the terminal may be address information that represents the location of the home network. For example, the information about the home network of the terminal may be an internet protocol (internet protocol, IP) address of the terminal, an IP address of a user plane function network element in the home network of the terminal, or a dedicated address of the home network of the terminal. After obtaining the information about the home network of the terminal through the second query message, the DNS server may determine, based on address affinity, the address of the AS corresponding to the first domain name.

For example, the information about the home network of the terminal may be an IP address 1 of the terminal. The IP address 1 may be used to obtain an address of an AS corresponding to a domain name that is not authorized in the serving network. The IP address 1 of the terminal is anchored to a UPF network element in the home network of the terminal. The second query message includes the IP address 1 of the terminal, and the DNS server may determine, based on the IP address 1, the address of the AS corresponding to the first domain name.

The home network of the terminal may allocate two IP addresses to the terminal. For example, in a multi-homed (multi-homed) scenario, a network side allocates the IP address 1 and an IP address 2 to the terminal. For example, a source address of the first query message is the IP address 2 of the terminal, and a destination address of the first query message is an IP address of the first network element. In this case, the first network element may determine, based on a case in which the source address of the first query message is the IP address 2 of the terminal, that the first query message is from the terminal. However, this application is not limited thereto. An IP address that is of the terminal and that is used to obtain the address of the AS corresponding to the first domain name and an IP address that is of the terminal and that is used by the terminal to receive or send a message may be a same IP address of the terminal.

Alternatively, the information about the home network of the terminal may be the IP address of the UPF network element in the home network of the terminal or the dedicated address of the home network. The dedicated address of the home network of the terminal may be a dedicated address used to obtain, in the serving network of the terminal, an address of an AS corresponding to an unauthorized domain name, or the dedicated address of the home network may be further used for another purpose. This is not limited in this application. For example, the dedicated address of the home network may be the IP address of the terminal, and the IP address of the terminal is an IP address obtained through network address translation (network address translation, NAT). For another example, the dedicated address of the home network may be an address of a specific network element in the home network. Specifically, the dedicated address of the home network may be an address of a session management function network element in the home network, or may be an address of an edge application server discovery function in the home network.

In an optional implementation, after receiving the first query message, the first network element may provide, for the DNS server, the information about the home network of the terminal according to a rule used for a query message from the terminal.

The second network element may send information to the first network element, where the information indicates the rule used for the query message from the terminal. Correspondingly, the first network element receives the information that indicates the rule used for the query message from the terminal.

Example 1: The rule includes: When the query message from the terminal includes a domain name that is not authorized in the visited network, the first network element provides, for the DNS server, the information about the home network of the terminal.

The second network element may obtain, from a network element in the home network, the information about the home network of the terminal, and then send, to the first network element, the information about the home network of the terminal. The information about the home network of the terminal may be included in the foregoing information that indicates the rule.

The rule indicated by the second network element to the first network element specifically includes: If the query message from the terminal includes the domain name that is not authorized in the visited network, the first network element includes the information about the home network of the terminal and the unauthorized domain name in one message, and provides the message for the DNS server.

For example, the second network element may be an SMF network element in the serving network of the terminal, and the first network element may be an EASDF network element in the serving network of the terminal. In this case, the SMF network element sends DNS context update information to the EASDF network element, where the DNS context update information includes a rule used for the query message from the terminal, and the rule includes: When the query message received from the terminal includes the domain name that is not authorized in the visited network, the EASDF network element adds, to the query message, the information about the home network of the terminal as an ECS option information element, and provides the query message for the DNS server. After the EASDF network element receives the first query message from the terminal, the EASDF network element adds, to the first query message, the information about the home network of the terminal as the ECS option information element, to obtain the second query message, and sends the second query message to the DNS server, so that the DNS server determines, based on the information about the home network that is used as the ECS option information element, the address of the AS corresponding to the first domain name.

In Example 2, the rule includes: after receiving a query message from the terminal, providing a domain name in the query message for the second network element.

As described above, the first network element sends the first domain name to the second network element according to the rule, the second network element determines that the first domain name is not authorized in the serving network and sends the information about the home network of the terminal to the first network element, and the first network element provides the information about the home network of the terminal for the DNS server.

For example, the first network element is an EASDF network element in the serving network, and the second network element is an SMF network element in the serving network. In this case, the SMF network element determines, based on the first domain name reported by the EASDF network element, an ECS option corresponding to the first domain name (or in other words, determines information that corresponds to the domain name and that is used to construct the ECS option). The V-SMF network element sends the information about the home network of the terminal to the EASDF network element. The EASDF network element may add, to the second query message, the information about the home network of the terminal as the ECS option, so that the second query message includes the information about the home network of the terminal. In this example, the EASDF network element does not need to determine whether the first domain name is authorized in the serving network.

A difference between Example 2 and Example 1 lies in that, in Example 1, the first network element obtains the information about the home network of the terminal before receiving the first query message, and determines, based on a case in which the first domain name is not authorized in the serving network, that the second query message includes the information about the home network of the terminal. However, in Example 2, after receiving the first query message and sending the first domain name to the second network element, the first network element obtains the information about the home network of the terminal, and determines that the second query message includes the information about the home network of the terminal.

For example, both the first query message and the second query message may be referred to as DNS query (DNS query) messages.

S203: The DNS server sends, to the first network element, the address of the AS corresponding to the first domain name.

Correspondingly, the first network element receives, from the DNS server, the address of the AS corresponding to the first domain name.

For example, the DNS server sends, to the first network element, a second response message for the second query message, where the second response message includes the address of the AS corresponding to the first domain name. The first network element receives the second response message from the DNS server, and determines, based on the second response message, the address of the AS corresponding to the first domain name.

S204: The first network element sends, to the terminal, the address of the AS corresponding to the first domain name.

Correspondingly, the terminal receives, from the first network element, the address of the AS corresponding to the first domain name.

For example, the first network element sends, to the terminal, a first response message for the first query message, where the first response message includes the address of the AS corresponding to the first domain name. The terminal receives the first response message from the first network element, and determines, based on the first response message, the address of the AS corresponding to the first domain name.

According to the foregoing solution, when the first network element receives a query message that is from the terminal and that includes a domain name not authorized in the serving network, the first network element may provide the information about the home network of the terminal for the DNS server, so that the DNS server can find, based on the information about the home network of the terminal, the address of the AS corresponding to the first domain name, and feed back the address to the terminal. In this way, the terminal can obtain, in the serving network (the visited network or the intermediate network), an address of an AS corresponding to the domain name that is not authorized in the serving network, so that the terminal can access a service provided by the AS. This ensures that the terminal device can access the service corresponding to the unauthorized domain name, and avoids that the terminal cannot access a service corresponding to a domain name because the domain name is not authorized.

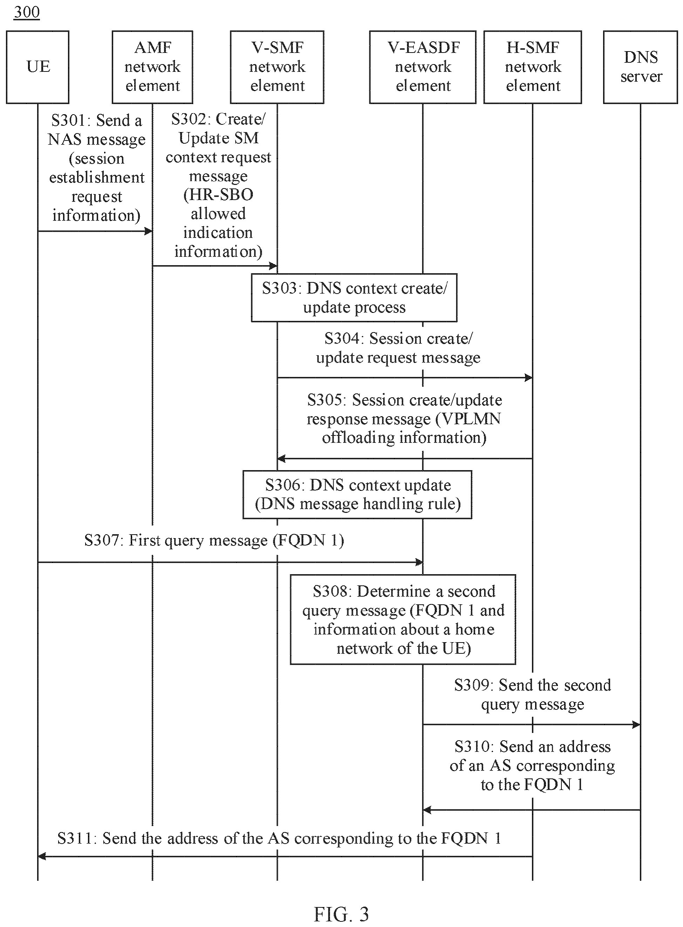

FIG. 3 is a schematic flowchart of a communication method 300 according to an embodiment of this application. The embodiment shown in FIG. 3 shows a specific implementation of the embodiment shown in FIG. 2 applied to a scenario in which a serving network of a terminal (UE is used as an example) is a visited network. A V-EASDF network element is an example of the first network element, and in the visited network, the V-EASDF network element is a function network element that is configured to provide, for the UE, an AS discovery function. A V-SMF network element is an example of the second network element, and in the visited network, the V-SMF network element is a function network element that is configured to manage a session of the UE. An AMF network element is a function network element that is in the visited network and that is configured for access management and/or mobility management for the UE. An H-SMF network element is a function network element that is in a home network of the UE and that is configured to manage a session of the UE. It should be understood that names of network elements are not limited in this application. During specific implementation, the communication method 300 may be implemented by a network element that has another name and that has a corresponding function. The method 300 may include but is not limited to the following steps.

S301: The UE may send a NAS message to the AMF network element, where the NAS message includes a session establishment/modification request message.

The session establishment/modification request message is a session establishment request message or a session modification request message.

The UE sends, in the visited network, the NAS message that carries the session establishment/modification request information to the AMF network element, to initiate a home routed HR session establishment/modification procedure. Correspondingly, the AMF network element receives the NAS message from the UE, and determines, based on the session establishment/modification request information in the NAS message, that the UE initiates the HR session establishment procedure.

S302: The AMF network element sends a create/update session management context request message to the V-SMF network element, where the request message carries an HR-SBO allowed indication information (HR-SBO allowed indication).

The HR-SBO allowed indication information indicates that a service in an HR session is authorized (or allowed) to be locally offloaded (that is, the VPLMN). The AMF network element may determine the HR-SBO allowed indication information based on subscription information of the home network.

For example, the create session management context request message may be denoted as an N_{SMF} protocol data unit (protocol data unit, PDU) session create/update management context request (N_{SMF}_PDUSession_Create/UpdateSMContext request) message.

S303: The V-SMF network element and the V-EASDF network element perform a DNS context create/update process.

After the V-SMF network element receives the create/update session management context request message from the AMF network element, the V-SMF network element selects the V-EASDF network element used to discover an AS for the UE, and the V-SMF network element and the V-EASDF network element perform the DNS context create/update process of the V-EASDF network element.

A DNS context may include but is not limited to an IP address of the UE, a data network name (data network name, DNN), and single network slice selection assistance information (single network slice selection assistance information, S-NSSAI) used to identify a network slice. It should be understood that, because in this case, the visited network has not exchanged information with the home network, and has not obtained an IP address allocated by the home network to the UE, the IP address that is of the UE and that is included in the DNS context in this case is a special value or a special IP address that may be used to identify the UE.

The DNS context create process may include: The V-SMF network element invokes a DNS context create/update request message, to send the DNS context create/update request message to the V-EASDF network element, and receives a DNS context create/update response message from the V-EASDF network element. This creates/updates the DNS context of the V-EASDF network element. For example, the DNS context create/update request message may be denoted as an N_{EASDF} DNS context create/update request (N_{EASDF}_DNSContext_Create/Update Request) message. The DNS context create/update response message may be denoted as an N_{EASDF} DNS context create/update response (N_{EASDF}_DNSContext _Create/Update Response) message.

S304: The V-SMF network element sends a session create/update request message to the H-SMF network element.

After completing creation/update of the DNS context of the V-EASDF network element, the V-SMF network element sends the session create/update request message to the H-SMF network element, where the session create/update request message includes the HR-SBO allowed indication information obtained from the AMF network element in S302. After receiving the session create/update request message from the V-SMF network element, the H-SMF network element determines, based on the HR-SBO allowed indication information in the session create/update request message, that the visited network of the UE requests to authorize a service in a session to be locally offloaded in the visited network.

For example, the session create request message may be denoted as an N_{SMF} PDU session create/update request message.

S305: The H-SMF network element sends a session create/update response message to the V-SMF network element, where the session create/update response message carries VPLMN offloading information.

Correspondingly, the V-SMF network element receives the session create/update response message from the H-SMF network element, and obtains the VPLMN offloading information. For example, the session create/update response message may be denoted as an N_{SMF} PDU session create/update request message.

The VPLMN offloading information includes information about domain names described above, for example, information about a domain name authorized in the visited network (the information about the domain name may include the first domain name set) and/or information about a domain name that is not authorized in the visited network (the information about the domain name may include the second domain name set). For example, a domain name in a domain name set may be an FQDN or another domain name. Descriptions are provided below by using an example in which a domain name is an FQDN.

The V-SMF network element may determine, based on the VPLMN offloading information, that a corresponding service is authorized by the home network of the UE to be offloaded to a domain name of a local data network of the visited network, and/or the V-SMF network element may determine, based on the VPLMN offloading information, that a corresponding service is not authorized by the home network of the UE to be offloaded to a domain name of a local data network of the visited network.

In an optional implementation, the VPLMN offloading information may further include an address of an AS authorized in the visited network and/or an address of an AS that is not authorized in the visited network. For example, the address of the AS may specifically be an IP address of the AS. The V-SMF network element may determine, based on the VPLMN offloading information, an address of an AS that is authorized by the home network of the UE to offload a corresponding service to the local data network of the visited network, and/or the V-SMF network element may determine, based on the VPLMN offloading information, an address of an AS that is not authorized by the home network of the UE to offload a corresponding service to the local data network of the visited network.

In addition to the VPLMN offloading information, the session create/update response message further includes the IP address of the UE, that is, an IP address allocated by the home network to the UE. In an optional implementation, the session create/update response message includes two IP addresses allocated by a network side to the UE, for example, an IP address 1 and an IP address 2. As described above, the IP address 1 may be used to obtain an address of an AS corresponding to a domain name that is not authorized in the visited network, and the IP address 1 is anchored in a UPF network element in the home network of the terminal. The IP address 2 is used to receive or send a message (or a packet). However, this application is not limited thereto. Alternatively, the session create/update response message may include only one IP address allocated by the home network to the UE to implement the foregoing two functions.

The session create/update response message may further include tunnel information of the UPF network element (namely, the H-UPF network element) in the home network. The tunnel information of the H-UPF network element is used to establish a tunnel connection between a UPF network element (namely, the V-UPF network element) in the visited network and the H-UPF network element. The tunnel information of the H-UPF network element may be an IP address of the H-UPF network element and a tunnel endpoint identifier (tunnel endpoint identifier, TEID).

In the embodiment shown in FIG. 3, the session create/update response message may further include information about the home network of the UE, and the information about the home network of the UE is provided by the V-SMF network element for the V-EASDF network element, so that the V-EASDF network element provides the information about the home network for the DNS server when a query message received from the UE includes a domain name that is not authorized in the visited network. In other words, the H-SMF network element may specially send the information about the home network of the UE to the V-SMF network element. However, this application is not limited thereto. Alternatively, the H-SMF network element may add the information about the home network of the UE to another message or information element, and send the information to the V-SMF network element.

S306: The V-SMF network element and the V-EASDF network element perform a DNS context update process.

The V-SMF network element updates a DNS context of the V-EASDF network element, including: The V-SMF network element sends a DNS message handling rule (DNS message handling rules).

In an optional implementation, the rule includes: when a query message that is from the terminal and that includes a domain name that is not authorized in the visited network is received, providing the information about the home network of the UE for the DNS server. For example, the information about the home network of the UE may include an IP address of the UE, an IP address of the H-UPF network element of the UE, or a dedicated address of the home network.

If the information about the home network of the UE includes the dedicated address of the home network, the dedicated address of the home network may be obtained by the V-SMF network element from the H-SMF network element. However, this application is not limited thereto.

Specifically, the rule may include: when the query message that is from the terminal and that includes the domain name not authorized in the visited network is received, adding the information about the home network of the UE to the query message, and providing a handled query message for the DNS server.

In another optional implementation, the rule includes: after receiving a query message from the terminal, providing a domain name in the query message for a second network element.

The DNS context update process may include: The V-SMF network element invokes a DNS context update request message, to send the DNS context update request message to the V-EASDF network element, and receives a DNS context create response message from the V-EASDF network element. This updates the DNS context of the V-EASDF network element. For example, the DNS context update message may carry the DNS handling rule. Optionally, the DNS context update request message may further carry but is not limited to one or more of the following information:
the information about the home network of the UE, information about a domain name authorized in the visited network, or information about a domain name that is not authorized in the visited network.

For example, the DNS context update request message may be denoted as an N_{EASDF} DNS context update request (N_{EASDF}_DNSContext_Update Request) message. The DNS context update response message may be denoted as an N_{EASDF} DNS context update response (N_{EASDF}_DNSContext_Update Response) message.

After the V-SMF network element completes updating the DNS context of the V-EASDF network element, a network element in the visited network may continue to perform another step (not shown in FIG. 3) of session create/modification of the UE, where the step includes: The V-SMF network element sends a session create/modification accept message to the UE, where the session create/modification accept message carries an address of the V-EASDF network element. After receiving the session create/modification accept message, the UE may determine the address of the V-EASDF network element used to discover an AS for the UE.

When the UE needs to query a service, the UE initiates a service query process, which specifically includes the following steps.

S307: The UE sends a first query message to the V-EASDF network element, where the first query message carries an FQDN 1.

A source IP address of the first query message is the IP address of the UE, and a destination IP address of the first query message is the address of the V-EASDF network element. Correspondingly, the V-EASDF network element receives the first query message from the UE, and determines that the UE queries for an address of an AS corresponding to the FQDN 1. Specifically, the first query message may be transferred to the V-EASDF network element via a user plane. For example, the first query message is transferred to the V-EASDF network element via a RAN and a V-UPF network element.

S308: The V-EASDF network element determines a second query message. The second query message includes the FQDN 1 and the information about the home network of the UE.

In an optional implementation, the V-EASDF network element may obtain information about a domain name. For example, the V-EASDF network element obtains the information about the domain name from the DNS context, and determines, based on the information about the domain name, that the FQDN 1 is a domain name that is not authorized in the visited network. For example, the information about the domain name includes a first domain name set, and a domain name included in the first domain name set is a domain name authorized in the visited network. In this case, the V-EASDF network element determines that the FQDN 1 does not belong to the first domain name set, and determines that the FQDN 1 is a domain name that is not authorized in the visited network. In addition/alternatively, for example, the information about the domain name includes a second domain name set, and a domain name included in the second domain name set is a domain name that is not authorized in the home network. In this case, the V-EASDF network element determines that the FQDN 1 belongs to the second domain name set, and determines that the FQDN 1 is a domain name that is not authorized in the visited network.

If the V-EASDF network element determines that the FQDN 1 queried by the UE is a domain name that is not authorized in the visited network, the V-EASDF network element determines the second query message according to the DNS message handling rule, where the second query message includes the FQDN 1 and the information about the home network of the UE. For example, the V-EASDF network element adds the information about the home network of the UE to the first query message, to obtain the second query message.

The DNS message handling rule specifically includes: when a query message that is from the terminal and that includes a domain name not authorized in the visited network is received, adding, to the query message, the information about the home network of the UE as an ECS option, and providing the query message for the DNS server. The V-EASDF network element may add, to the first query message, the information about the home network of the UE as the ECS option according to the handling rule, to obtain the second query message.

In another optional implementation, after receiving the first query message, the V-EASDF network element provides the FQDN 1 for the V-SMF network element according to a DNS query message handling rule. The V-SMF network element determines, based on the FQDN 1, an ECS option corresponding to the FQDN 1 (or in other words, determines information that corresponds to the FQDN 1 and that is used to construct the ECS option). The V-SMF network element sends the information about the home network of the UE to the V-EASDF network element. The V-EASDF network element may add, to the second query message, the information about the home network of the UE as the ECS option, so that the second query message includes the information about the home network of the terminal.

S309: The V-EASDF network element sends the second query message to the DNS server.

Correspondingly, the DNS server receives the second query message from the V-EASDF network element. The DNS server may determine, based on the FQDN 1, the information about the home network of the UE, and address affinity, the address of the AS corresponding to the FQDN 1.

S310: The DNS server sends, to the V-EASDF network element, the address of the AS corresponding to the FQDN 1.

For example, the DNS server sends, to the V-EASDF network element, a second response message for the second query message, where the second response message includes the address of the AS corresponding to the FQDN 1. The V-EASDF network element receives the second response message from the DNS server, and determines, based on the second response message, the address of the AS corresponding to the FQDN 1.

S311: The V-EASDF network element sends, to the UE, the address of the AS corresponding to the FQDN 1.

Correspondingly, the UE receives, from the V-EASDF network element, the address of the AS corresponding to the FQDN 1.

For example, the V-EASDF network element sends, to the UE, a first response message for the first query message, where the first response message includes the address of the AS corresponding to the FQDN 1. The UE receives the first response message from the V-EASDF network element, and determines, based on the first response message, the address of the AS corresponding to the FQDN 1.

As described above, when the V-EASDF network element may determine, in S308, that the FQDN 1 is a domain name that is not authorized in the visited network, S309 to S311 are performed. If the V-EASDF network element determines that the FQDN 1 is the domain name that is not authorized in the visited network, the V-EASDF network element exchanges information with the V-SMF network element, to trigger the V-SMF network element to insert/update a VPLMN ULCL/BP/L-PSA. The V-EASDF network element reports the FQDN 1 to the V-SMF network element. The V-SMF network element determines ECS option establishment indication information based on the FQDN 1 and AS deployment information (including information such as an FQDN and a data network access identifier (data network access identifier, DNAI)), and sends the ECS option establishment indication information to the V-EASDF network element. Then, the V-EASDF network element adds an ECS option to the first query message based on the ECS option establishment indication information, and sends a handled query message to the DNS server. The DNS server queries, based on a received query message, the address of the AS corresponding to the FQDN 1, and sends the address to the V-EASDF network element. Then, the V-EASDF network element reports the address of the AS corresponding to the FQDN 1 to the V-SMF network element, to trigger the V-SMF to insert or update the ULCL/BP/L-PSA. The V-SMF network element indicates the V-EASDF network element to send, to the UE, a response message for the first query message, where the response message carries the address of the AS corresponding to the FQDN 1.

According to the foregoing solution, when the V-EASDF network element receives a query message that is from the UE and that includes a domain name not authorized in the visited network, the V-EASDF network element may provide the information about the home network of the UE for the DNS server, so that the DNS server can find, based on the information about the home network of the UE, the address of the AS corresponding to the FQDN 1, and feed back the address to the terminal. In this way, the terminal can obtain, in the visited network, an address of an AS corresponding to a domain name that is not authorized in the serving network, so that the terminal can access a service provided by the AS.

Embodiments of this application further provide a method. In the method, when a query message from a terminal includes a domain name that is not authorized by a home network to offload a service to a local DN corresponding to a serving network, a core network of the serving network may transfer the query message to the home network via a control plane network element, and then, the query message is transferred to a server in a local DN corresponding to the home network or a central server. In this way, the terminal can obtain, in the serving network, an address of an AS corresponding to the domain name that is not authorized in the serving network.

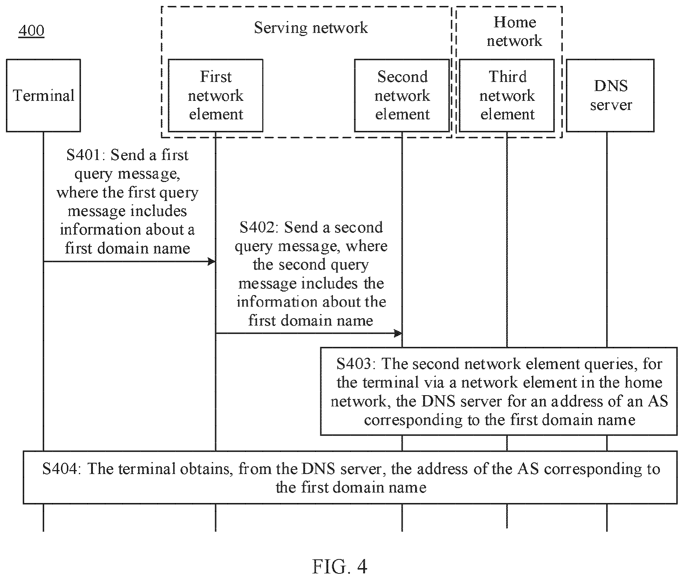

FIG. 4 is a schematic flowchart of a communication method 400 according to an embodiment of this application. As shown in FIG. 4, a first network element is a network element that is in the serving network (for example, a visited network or an intermediate network) of the terminal and that is configured to discover an AS, a second network element is a network element that is in the serving network of the terminal and that is configured to manage a session of the terminal, a third network element is a network element in the home network of the terminal, and a DNS server is a local server corresponding to the home network or the central server. Alternatively, the DNS server shown in FIG. 4 may be replaced with a network element that is in the home network and that is configured to discover an AS, and the network element configured to discover the AS may be referred to as a DNS resolver (DNS resolver). The following uses the DNS server as an example for description. The method 400 includes but is not limited to the following steps.

S401: The terminal sends a first query message to the first network element, where the first query message includes information about a first domain name.

Correspondingly, the first network element receives the first query message from the terminal. The first network element determines that the terminal queries an address of an AS corresponding to the first domain name, and the first network element may determine that the first domain name is not authorized in the serving network. S401 may be implemented with reference to the foregoing descriptions of S201. Details are not described herein again.

S402: The first network element sends a second query message to the second network element, where the second query message includes the information about the first domain name.

In an optional implementation, the first network element may determine the second query message based on a case in which the first domain name included in the received first query message is a domain name that is not authorized in the serving network, and send the second query message to the second network element. Specifically, the first network element may determine, according to a rule used for a query message, the second query message, and determine to send the second query message to the second network element.

For example, the second network element may send information to the first network element, where the information indicates a rule used for a query message that is from the terminal and that is used to query an address of an application server. Correspondingly, the first network element receives the information from the second network element, and determines, based on the information, the rule used for the query message. When receiving the query message, the first network element handles the query message according to the rule. For example, the information may be carried in a DNS context update message sent by the second network element to the first network element.

The rule may include but is not limited to the following implementations.

Manner 1 is denoted as a rule 1, and the rule 1 includes: When the query message used to query an address of an AS includes a domain name that is not authorized in the visited network of the terminal, the first network element sends, to the second network element, the query message that includes the unauthorized domain name.

After receiving the first query message that includes the first domain name that is not authorized in the serving network, the first network element determines the second query message according to the rule 1, and sends the second query message to the second network element, where the second query message includes the information about the first domain name.

For example, the first network element may send the first query message to the second network element, where the second query message is the first query message, a source address of the first query message is an IP address of the terminal, and a destination address of the first query message is an address of the first network element. However, this application is not limited thereto. The second query message may be different from the first query message. For example, at least one piece of information included in the second query message is different from that included in the first query message.

Manner 2 is denoted as a rule 2, and the rule 2 includes: When the query message used to query an address of an application server includes a domain name that is not authorized in the visited network of the terminal, the first network element sends, to the second network element, the query message that includes the unauthorized domain name and whose destination address is an address of the DNS server.

The information that indicates the rule and that is sent by the second network element to the first network element includes the address of the DNS server, where the address of the DNS server may be an address of the DNS server corresponding to the home network of the terminal or an address of the central DNS server. The first network element obtains the address of the DNS service from the information.

After receiving the first query message that includes the first domain name that is not authorized in the serving network, the first network element determines the second query message according to the rule 2, and sends the second query message to the second network element, where the second query message includes the information about the first domain name, and a destination address of the second query message is the address of the DNS server.

For example, a source address of the first query message is an IP address of the terminal, and a destination address of the first query message is an address of the first network element. After changing the destination address of the first query message to the address that is of the DNS server and that is obtained from the second network element, the first network element obtains the second query message, and sends the second query message to the second network element. However, this application is not limited thereto. The second query message and the first query message may further include other different information in addition to different destination addresses.

In another optional implementation, the first network element does not determine whether the first domain name is authorized in the serving network. For example, a handling rule that is used for a query message and that is notified by the second network element to the first network element is a rule 3, where the rule 3 includes: when receiving the query message from the terminal, providing a domain name in the query message for the second network element. After receiving the first query message, the first network element sends the first domain name to the second network element according to the rule 3. The second network element determines, based on the first domain name, and information about a domain name authorized in the serving network that is obtained by the second network element and/or information that is about a domain name not authorized in the serving network and that is obtained by the second network element, that the first domain name is not authorized in the serving network, and the second network element sends indication information to the first network element, where the indication information indicates the first network element to send the second query message to the second network element.

In one manner, the first network element sends the first query message to the second network element based on the indication information, that is, the second query message is the first query message.

In another manner, the indication information specifically indicates the first network element to send the second query message to the second network element, and a destination address of the second query message is the address of the DNS server. In this way, the first network element sends the second query message to the second network element after receiving the indication information, and the destination address of the second query message is the address of the DNS server.

In still another manner, the foregoing rule 3 further includes: After the first network element sends the domain name to the second network element and receives indication information indicating that the second network element indicates the first network element to send the query message, a destination address of the query message sent by the first network element to the second network element in response to the indication information is the address of the DNS server. The first network element may send, to the second network element according to the rule 3, the second query message whose destination address is the DNS server.

Optionally, the first network element may specifically obtain the address of the DNS server before receiving the first query message or obtain the address of the DNS server from the indication information. The address of the DNS server may be an address of the DNS server corresponding to the home network of the terminal or an address of the central DNS server. The first network element obtains the address of the DNS service from the information.

In this implementation, if the second network element determines that a domain name from the first network element is a domain name authorized in the serving network, the second network element may determine ECS option establishment indication information based on the first domain name and AS deployment information (including information such as an FQDN and a data network access identifier (data network access identifier, DNAI)), and send the ECS option establishment indication information to the V-EASDF network element; and the first network element adds an ECS option to the first query message based on the ECS option establishment indication information, and sends a handled query message to a local DNS server in the visited network.

This application further provides a manner of replacing S402. In other words, after S401, the first network element may not perform S402, but perform the following steps: The first network element sends the first domain name to the second network element; and if the second network element determines that the first domain name is a domain name that is not authorized in the serving network, the second network element determines (or generates) a third query message, where the third query message includes the first domain name, and a destination address of the third query address is the address of the DNS server. The third query message is used by the second network element to query, for the terminal in S403 via a network element in the home network, the DNS server for the address of the AS corresponding to the first domain name.

S403: The second network element queries, for the terminal by using the network element in the home network, the DNS server for the address of the AS corresponding to the first domain name.

That the second network element queries, for the terminal by using the network element in the home network, the local DNS server (referred to as a DNS server corresponding to the home network below) in the home network or the central server for the address of the AS corresponding to the first domain name includes: After receiving the second query message, the second network element obtains the third query message based on the second query message, where the third query message includes the information about the first domain name, and the second network element sends the third query message to the third network element.

The third network element is a network element in the home network of the terminal. The second network element transfers the third query message to the home network of the terminal, so that the second network element queries, for the terminal by using the network element in the home network, the DNS server for the address of the AS corresponding to the first domain name.

The second query message received by the second network element from the first network element includes the information about the first domain name, a source address of the second query message is the IP address of the terminal, and a destination address of the second query message is the address of the first network element.

In this case, in an implementation, the third query message sent by the second network element to the third network element is the second query message, that is, after obtaining the second query message from the first network element, the second network element forwards the second query message to the third network element. For example, the third network element may change the destination address of the second query message to an address of the DNS server corresponding to the home network or an address of the central server, so that a DNS server corresponding to the destination address can obtain the query message, and the DNS server can query, for the terminal, the address of the AS corresponding to the first domain name.

In this case, in another implementation, a destination address of the third query message sent by the second network element to the third network element is an address of a DNS server. The address of the DNS server may be obtained by the second network element from the network element in the home network, and the second network element sets the destination address of the third query message to the address of the DNS server. For example, the address of the DNS server may be an address of the DNS server corresponding to the home network of the terminal or the address of the central DNS server, so that a DNS server corresponding to the destination address can obtain the query message, and the DNS server queries, for the terminal, the address of the AS corresponding to the first domain name.

For example, the second network element changes the destination address of the second query message to the address of the DNS server, to obtain the third query message. However, this application is not limited thereto. The third query message and the second query message may further include other different information in addition to different destination addresses.

If the second network element receives the second query message from the first network element, the second query message includes the information about the first domain name, a source address of the second query message is the IP address of the terminal, and a destination address of the second query message is the address of the DNS server, the third query message sent by the second network element to the third network element may be the second query message, or may be obtained after the second query message is handled by the second network element. A source address of the third query message is the IP address of the terminal, and a destination address of the third query message is the address of the DNS server, so that a DNS server corresponding to the destination address can obtain the query message, and the DNS server queries, for the terminal, the address of the AS corresponding to the first domain name.

S404: The terminal obtains, from the DNS server, the address of the AS corresponding to the first domain name.

After finding the address of the AS corresponding to the first domain name, the DNS server may transfer the address of the AS to a network element in the serving network via the network element in the home network, to transfer the address of the AS to the terminal.

For example, the address of the AS may be transferred by the DNS server to the third network element, and is transferred by the third network element to the second network element and then transferred to the first network element, so that the terminal can obtain the address of the AS from the first network element. That is, the address of the AS is returned to the terminal via network elements that transfer a query message. However, this application is not limited thereto. The address of the AS may be transferred to the terminal without using one or more network elements in the home network and the visited network that transfer a query message.

According to the foregoing solution, when the EASDF network element in the serving network receives, from the UE, a query message that includes a domain name that is not authorized in the visited network, the EASDF network element sends the query message to the SMF network element, so that the message may be transferred to the home network via the SMF network element. Then, the message is transferred via the home network, so that the DNS server corresponding to the home network or the central server may find, for the terminal, the address of the AS corresponding to the first domain name, and may feed back the address of the AS corresponding to the first domain name to the terminal via the home network and the serving network. In this way, the terminal may access a service provided by the AS.

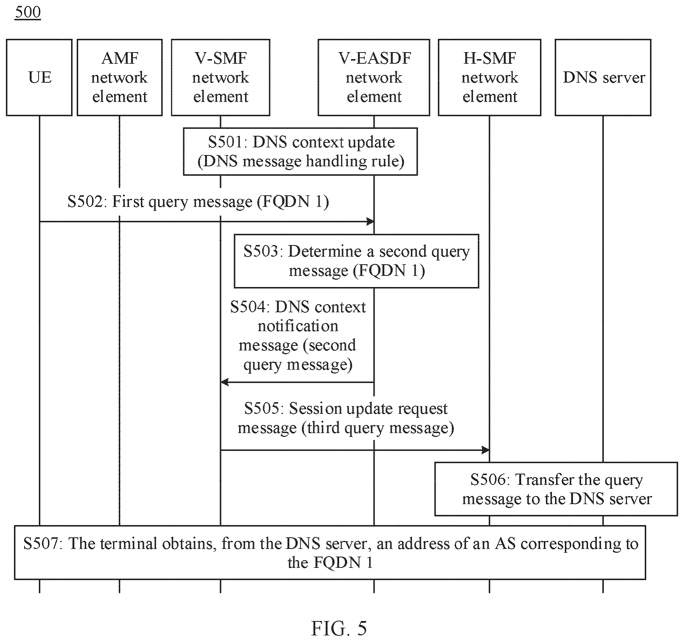

FIG. 5 is a schematic flowchart of a communication method 500 according to an embodiment of this application. The embodiment shown in FIG. 5 shows a specific implementation of the embodiment shown in FIG. 4 applied to a scenario in which a serving network of a terminal (UE is used as an example) is a visited network.

It should be understood that before S501 in the method 500, S301 to S305 shown in FIG. 3 may be performed between the UE and network elements. For details, refer to descriptions in the embodiment shown in FIG. 3. For a part that is in the embodiment shown in FIG. 5 and that is the same as that in the embodiment shown in FIG. 3, refer to descriptions in the embodiment shown in FIG. 3. For brevity, details are not described herein again. The method 500 may include but is not limited to the following steps.

S501: A V-SMF network element and a V-EASDF network element perform a DNS context update process.

The V-SMF network element updates a DNS context of the V-EASDF network element, including: The V-SMF network element sends a DNS message handling rule (DNS message handling rules) to the V-EASDF network element. The rule may be the rule 1 and the rule 2 in the embodiment shown in FIG. 4 described above.

S502: The UE sends a first query message to the V-EASDF network element, where the first query message includes an FQDN 1.

Correspondingly, the V-EASDF network element receives the first query message of the UE, and determines that the UE queries for an address of an AS corresponding to the FQDN 1 and the FQDN 1 is a domain name that is not authorized in a visited network of the UE.

S503: The V-EASDF network element determines a second query message.

A source IP address of the first query message is an IP address of the UE, and a destination IP address of the first query message is an address of the V-EASDF network element. The V-EASDF network element obtains the second query message according to the DNS message handling rule obtained in S501.

In an example, the rule is the foregoing rule 1. In this case, the V-EASDF network element determines the second query message according to the rule 1, where the second query message includes the FQDN 1, a source address of the second query message is the IP address of the UE, and a destination address of the second query message is the address of the V-EASDF network element.

In another example, the rule is the foregoing rule 2. In this case, the V-EASDF network element determines the second query message according to the rule 2, where the second query message includes the FQDN 1, a source address of the second query message is the IP address of the UE, and a destination address of the second query message is an address of a DNS server. The address of the DNS server may be an address of a DNS server corresponding to a home network or an address of a central server. The address of the DNS server may be obtained by the V-EASDF network element from the V-SMF network element in S501. The V-SMF network element may obtain the address of the DNS server from the home network. For example, the address of the DNS server may be included in VPLMN offloading information in a session create/update response message.

In another example, the rule is the rule 3. In this case, the V-EASDF network element sends the FQDN 1 to the V-SMF network element according to the rule 3. After the V-SMF network element determines that the FQDN 1 is a domain name that is not authorized in the visited network, the V-SMF network element indicates the V-EASDF network element to send a query message to the V-SMF network element. The V-EASDF network element determines the second query message and sends the second query message to the V-SMF network element, where the second query message includes the FQDN 1, and a destination address of the second query message is the address of the V-EASDF network element or the address of the DNS server. For a specific manner in which the V-EASDF network element determines the second query message, refer to related descriptions in S402. Details are not described herein again.

For example, the address of the DNS server may be an IP address of the DNS server.

S504: The V-EASDF network element sends a DNS context notification message to the V-SMF network element, where the DNS context update message includes the second query message.

The V-EASDF network element sends, to the V-SMF network element according to a DNS query message handling rule, the DNS context notification message that includes the second query message. Correspondingly, the SMF network element receives the DNS context update message from the V-EASDF network element, obtains the second query message, and determines a third query message based on the second query message. For a specific manner, refer to the foregoing description in S403. Details are not described herein again.

For example, the DNS context notification message may be denoted as an N_{EASDF} DNS context notification (N_{EASDF}_DNSContext_Notify) message.

S505: The V-SMF network element sends a session update request message to an H-SMF network element, where the session update request message includes the third query message.

Correspondingly, the H-SMF network element receives the session update request message from the V-SMF network element, and obtains the third query message. For example, the session update request message may be denoted as an N_{SMF} PDU session update request (N_{SMF}_PDUSession_Update Request) message.

S506: The H-SMF network element transfers the query message to the DNS server.

In an example, a source address of the third query message is the IP address of the UE, and a destination address of the third query message is the address of the DNS server. In this case, the H-SMF network element may send the third query message to an H-UPF network element, and the H-UPF network element sends the third query message to a DNS server corresponding to the address of the DNS server.

In another example, a source address of the third query message is the IP address of the UE, and a destination address of the third query message is the address of the V-EASDF. In this case, the H-SMF network element may change the destination address of the third query message to the address of the DNS server, and then send the third query message to an H-UPF network element. Alternatively, the H-SMF network element transfers the third query message to the H-UPF network element, and the H-UPF network element modifies the destination address of the third query message. Then, the H-UPF network element sends the query message to a DNS server corresponding to the destination address. Alternatively, the H-UPF network element sends the third query message to an H-EASDF network element, and after the H-EASDF modifies the destination address of the third query message, the H-EASDF transfers the query message to a DNS server corresponding to the destination address. The H-EASDF modifies the destination address of the third query message according to a DNS handling rule delivered by the H-SMF network element.

S507: The terminal obtains, from the DNS server, the address of the AS corresponding to the FQDN 1.

After determining the address of the AS corresponding to the FQDN 1, the DNS server sends a DNS response message, where the DNS response message includes the address of the AS corresponding to the FQDN 1, and a source address of the DNS response message is the address of the DNS server.

In an example, a destination address of the DNS response message is the IP address of the UE. The DNS response message may be transferred by the DNS server to the H-UPF network element, and then transferred to the UE via a V-UPF network element. Alternatively, a path along which the DNS response message is transferred by the DNS server to the UE may sequentially pass through the H-UPF network element, the V-UPF network element, the V-EASDF network element, and the V-UPF network element, and then the DNS response message is transferred to the UE.

In another example, a destination address of the DNS response message is the IP address of the V-EASDF network element, a path along which the DNS response message is transferred by the DNS server to the UE may sequentially pass through the H-UPF network element, the H-SMF network element, the V-SMF network element, the V-EASDF network element, and the V-UPF network element, and then the DNS response message is transferred to the UE. Alternatively, a path along which the DNS response message is transferred by the DNS server to the UE may sequentially pass through the H-UPF network element, the V-UPF network element, the V-EASDF network element, and the V-UPF network element, and then the DNS response message is transferred to the UE.

According to the foregoing solution, when the V-EASDF network element receives, from the UE, a query message that includes a domain name that is not authorized in the visited network, the V-EASDF network element sends the query message to the V-SMF network element, so that the message may be transferred to the home network via the V-SMF network element. Then, the message is transferred via the home network, so that the DNS server corresponding to the home network or the central server may find, for the terminal, the address of the AS corresponding to the FQDN 1, and may feed back the address to the terminal via the home network and the serving network. In this way, the terminal may access a service provided by the AS.

This application further provides another solution in which a terminal queries, by using a user plane of a serving network, an address of an AS corresponding to a domain name that is not authorized in the serving network. The following describes the solution.

The terminal determines that a to-be-queried first domain name is not authorized in the serving network, and the terminal determines a first message, where the first message includes a query message and indication information, the query message is used to query an address of an AS corresponding to the first domain name, and the indication information indicates that the query message is used to query an address of an AS corresponding to a domain name that is not authorized in the serving network, or the indication information indicates that the query message includes a domain name that is not authorized in the serving network.

In a manner, the terminal adds the indication information to an air interface protocol packet header and sends the air interface protocol packet header to an access network element. For example, the indication information is added to a service data adaptation protocol (service data adaptation protocol, SDAP) header or a packet data convergence protocol (packet data convergence protocol, PDCP) header. Then, a base station adds the indication information to a core network user plane protocol packet header, for example, a general packet radio service (general packet radio service, GPRS) tunneling protocol-user plane (GPRS tunneling protocol-user plane, GTP-U) header.

The terminal sends the first message to a UPF network element in the serving network. The UPF network element determines, based on the indication information in the first information, that the query message is used to query the address of the AS corresponding to the domain name that is not authorized in the serving network, and the UPF network element sends the query message to a UPF network element in a home network of the terminal, so that the UPF network element in the home network can find, for the terminal, the address of the AS corresponding to the domain name that is not authorized in the serving network. In this manner, the UPF network element in the serving network does not need to interpret the query message of the first message, and may determine, based on the indication information in the first message, to transfer the query message to the UPF network element in the home network.

Specifically, the first message may include a container (container), and the container carries a query message of the terminal. The indication information in the first message is carried outside the container. After reading the indication information in the first message, the UPF network element in the serving network sends the container to the UPF network element in the home network. The UPF network element in the serving network transparently transmits (transparent transmission for short) the container to the UPF network element in the home network.

In this solution, even if the terminal performs encryption protection on the query message (for example, a query message encrypted in a DOH or DOT encryption manner), the UPF network element in the serving network cannot interpret the query message, and the UPF network element can still determine, based on the indication information in the first message, to transfer the query message to the UPF network element in the home network without interpreting the query message, so that the UPF network element in the home network can find, for the terminal, the address of the AS corresponding to the domain name that is not authorized in the serving network. DOH is short for DNS over HTTPS, and DOH is a security domain name resolution solution that uses an encrypted HTTPS protocol to implement DNS resolution. HTTPS refers to hypertext transfer protocol secure (hypertext transfer protocol secure). DOT is a TLS-based DNS request for packet encryption, and is short for DNS over TLS, where TLS refers to hypertext transfer protocol secure.

It should be understood that, in the foregoing embodiments in FIG. 2 to FIG. 5, the first network element and the second network element have a capability of decrypting an encrypted-protected query message from the terminal. Therefore, regardless of whether the query message is encrypted, in embodiments in FIG. 2 to FIG. 5, the terminal can query an address of an AS corresponding to a domain name that is not authorized in a serving network.

It may be understood that, to implement functions in the foregoing embodiments, the foregoing network elements and the terminal include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by using hardware or hardware driven by computer software depends on particular application scenarios and design constraints of the technical solutions.

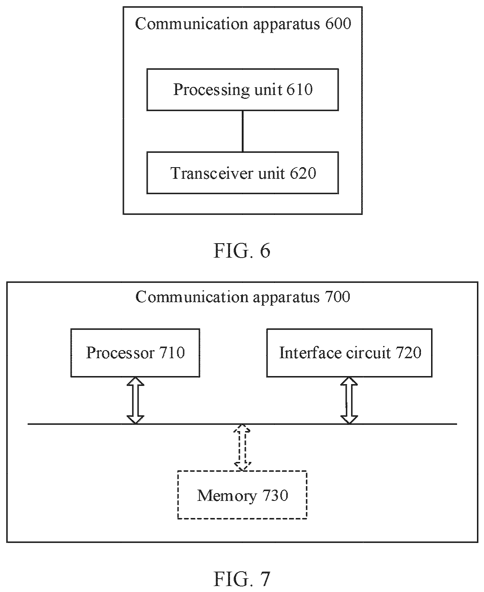

FIG. 6 and FIG. 7 each are a diagram of a structure of a possible communication apparatus according to an embodiment of this application. These communication apparatuses may be configured to implement functions of network elements (for example, the first network element, the second network element, the third network element, and the fourth network element) in the foregoing method embodiments. Therefore, these communication apparatuses can also implement beneficial effects of the foregoing method embodiments. In this embodiment of this application, the communication apparatus may be the EASDF network element, the SMF network element, or the UPF network element shown in FIG. 1, or may be a module (for example, a chip or a chip system) of a communication device that implements functions of the foregoing network elements.

The communication apparatus 600 includes a transceiver unit 620, and the transceiver unit 620 may be configured to receive or send information. The communication apparatus 600 may further include a processing unit 610, and the processing unit 610 may be configured to process an instruction or data, to implement a corresponding operation.

It should be understood that when the communication apparatus 600 is a chip configured in (or used in) a communication device, the transceiver unit 620 in the communication apparatus 600 may be an input/output interface or a circuit of the chip, and the processing unit 610 in the communication apparatus 600 may be a processor in the chip.

Optionally, the communication apparatus 600 may further include a storage unit 630. The storage unit 630 may be configured to store instructions or data. The processing unit 610 may execute the instructions or the data stored in the storage unit, to enable the communication apparatus to implement a corresponding operation.

For more detailed descriptions of the processing unit 610 and the transceiver unit 620, refer to related descriptions in the method embodiments shown in FIG. 3 to FIG. 5.

It should be understood that the transceiver unit 620 in the communication apparatus 600 may be implemented through a communication interface (for example, a transceiver, a transceiver circuit, an input/output interface, or a pin), and when the communication interface is the transceiver, the transceiver may include a receiver and/or a transmitter. The processing unit 610 in the communication apparatus 600 may be implemented by using at least one processor, or the processing unit 610 in the communication apparatus 600 may be implemented by using at least one logic circuit. Optionally, the communication apparatus 600 further includes the storage unit, and the storage unit may be implemented by using a memory.

When the foregoing communication apparatus is a module used in a network device, the network device module implements functions of network elements in the foregoing method embodiments. The network device module receives information from another module in the network device, where the information is received by the network device from another device (for example, another network device or a terminal); or the network device module sends information to another module in the network device, where the information is sent by the network device to another device (for example, another network device or a terminal). The network device module herein may be a chip of the network device.

As shown in FIG. 7, a communication apparatus 700 includes a processor 710 and an interface circuit 720. The processor 710 and the interface circuit 720 are coupled to each other. It may be understood that the interface circuit 720 may be a transceiver or an input/output interface. Optionally, the communication apparatus 700 may further include a memory 730 that is configured to store instructions executed by the processor 710, input data required by the processor 710 to run the instructions, or data generated after the processor 710 runs the instructions.

It may be understood that the processor in this embodiment of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any conventional processor.

Method steps in this embodiment of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to the processor, so that the processor can read information from the storage medium and write information into the storage medium. The storage medium may alternatively be a component of the processor. The processor and the storage medium may be disposed in an ASIC. In addition, the ASIC may be located in an access network device or a terminal device. The processor and the storage medium may alternatively exist in the communication device as discrete components.

According to the methods provided in embodiments of this application, an embodiment of this application further provides a computer program product. The computer program product includes computer program code. When the computer program code is executed by one or more processors, an apparatus including the processor is enabled to perform the methods shown in FIG. 3 to FIG. 5.

All or some of the foregoing embodiments may be implemented by using software, hardware, firmware, or any combination thereof. When the foregoing embodiments are implemented by using software, all or some of the embodiments may be implemented in a form of a computer program product. The computer program product includes one or more computer programs or instructions. When the computer programs or instructions are loaded and executed on a computer, procedures or functions in embodiments of this application are all or partially executed. The computer may be a general-purpose computer, a dedicated computer, a computer network, a network device, user equipment, or another programmable apparatus.

According to the methods provided in embodiments of this application, an embodiment of this application further provides a computer-readable storage medium. The computer-readable storage medium stores the foregoing computer programs or the instructions. When the computer programs or the instructions are run by one or more processors, an apparatus including the processor is enabled to perform the methods shown in FIG. 2 to FIG. 5.

The computer programs or the instructions may be stored in the computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium accessible by a computer, or a data storage device, such as a server or a data center, integrating one or more usable media. The usable medium may be a magnetic medium, for example, a floppy disk, a hard disk, or a magnetic tape, may be an optical medium, for example, a digital video disc, or may be a semiconductor medium, for example, a solid state drive. The computer-readable storage medium may be a volatile or non-volatile storage medium, or may include two types of storage media: a volatile storage medium and a non-volatile storage medium.

According to the methods provided in embodiments of this application, an embodiment of this application further provides a communication system that includes the foregoing one or more first communication apparatuses. The system may further include the foregoing one or more second communication apparatuses.

In the several embodiments provided in this application, it should be understood that the disclosed system, apparatus, and method may be implemented in other manners. For example, the described apparatus is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a first network element, a first query message from a terminal, wherein the first network element is in a visited network of the terminal, the first query message comprises information about a first domain name, and the first domain name is not authorized in the visited network of the terminal;
sending, by the first network element, a second query message to a domain name system DNS server, wherein the second query message comprises the information about the first domain name and information about a home network of the terminal, and the information about the home network is used to determine an address of an application server; and
receiving, by the first network element, the address of the application server from the DNS server.

2. The method according to claim 1, wherein the method further comprises:
receiving, by the first network element, information from a second network element, wherein the information indicates a rule used for a query message that is from the terminal and that is used to query the address of the application server, and the rule comprises: when the query message used to query the address of the application server comprises a domain name that is not authorized in the visited network of the terminal, the first network element provides the information about the home network for the DNS server.

3. The method according to claim 1, wherein the method further comprises:
receiving, by the first network element, information from a second network element, wherein the information indicates a rule used for the first query message, and the rule comprises: the first network element provides the information about the home network for the DNS server.

4. The method according to claim 2 or 3, wherein the rule specifically comprises: when the query message used to query the address of the application server comprises the domain name that is not authorized in the visited network of the terminal, the first network element comprises the information about the home network and the unauthorized domain name in one message, and provides the message for the DNS server.

5. The method according to any one of claims 2 to 4, wherein the first network element is a function network element that is in the visited network of the terminal and that is configured to discover an application server, and the second network element is a function network element that is in the visited network of the terminal and that is configured to manage a session of the terminal.

6. The method according to any one of claims 1 to 5, wherein the second query message comprises an ECS option information element, and the ECS option information element indicates the information about the home network.

7. The method according to any one of claims 1 to 6, wherein the information about the home network comprises one or more of the following:
an internet protocol IP address of the terminal, an IP address of a user plane function network element in the home network, or a dedicated address of the home network.

8. The method according to any one of claims 1 to 7, wherein the receiving, by the first network element, the address of the application server from the DNS server comprises:
receiving, by the first network element from the DNS server, a second response message for the second query message, wherein the second response message comprises the address of the application server; and
the method further comprises:
sending, by the first network element to the terminal, a first response message for the first query message, wherein the first response message comprises the address of the application server.

9. The method according to any one of claims 1 to 8, wherein the method further comprises:
obtaining, by the first network element, information about a domain name authorized in the visited network of the terminal and/or information about a domain name that is not authorized in the visited network of the terminal; and
determining, by the first network element based on the information about the domain name, that the first domain name is not authorized in the visited network of the terminal.

10. The method according to claim 9, wherein the information about the domain name comprises a first domain name set, the first domain name set comprises one or more domain names authorized in the visited network of the terminal, and the first domain name does not belong to the first domain name set; and/or
the information about the domain name comprises a second domain name set, the second domain name set comprises one or more domain names that are not authorized in the visited network of the terminal, and the first domain name belongs to the second domain name set.

11. The method according to any one of claims 1 to 10, wherein that the first domain name is not authorized in the visited network of the terminal comprises: a service corresponding to the first domain name is not authorized by the home network to be offloaded to a local data network.

12. The method according to any one of claims 1 to 11, wherein the application server is configured to provide the terminal with the service corresponding to the first domain name.

13. A communication method, comprising:
sending, by a second network element, first information to a terminal, wherein the first information indicates that a first network element is configured to discover an application server that provides a service for the terminal, and the first network element and the second network element are in a visited network of the terminal; and
sending, by the second network element, second information to the first network element, wherein the second information indicates a rule used for a query message that is from the terminal and that is used to query an address of the application server, and the rule comprises: when the query message used to query the address of the application server comprises a domain name that is not authorized in the visited network of the terminal, the first network element provides information about a home network of the terminal for a DNS server.

14. The method according to claim 13, wherein the rule specifically comprises: when the query message used to query the address of the application server comprises the domain name that is not authorized in the visited network of the terminal, the first network element comprises the information about the home network and the unauthorized domain name in one message, and provides the message for the DNS server.

15. The method according to claim 13 or 14, wherein the method further comprises:
receiving, by the second network element, third information from a third network element, wherein the third network element is in the home network of the terminal, the third information comprises the information about the home network of the terminal, and the information about the home network is used to query an application server corresponding to the domain name that is not authorized in the visited network of the terminal.

16. The method according to any one of claims 13 to 15, wherein the information about the home network comprises one or more of the following:
an internet protocol IP address of the terminal, an IP address of a user plane function network element in the home network, or a dedicated address of the home network.

17. The method according to any one of claims 13 to 16, wherein the first network element is a function network element that is in the visited network of the terminal and that is configured to discover an application server, and the second network element is a function network element that is in the visited network of the terminal and that is configured to manage a session of the terminal.

18. The method according to any one of claims 13 to 17, wherein the domain name that is not authorized in the visited network of the terminal comprises: a service corresponding to the domain name is not authorized by the home network to be offloaded to a local data network.

19. A communication method, comprising:
receiving, by a first network element, a first query message from a terminal, wherein the first query message comprises information about a first domain name, and the first domain name is not authorized in a visited network of the terminal;
sending, by the first network element, a second query message to a second network element, wherein the second query message comprises the information about the first domain name, a destination address of the second query message is an address of a domain name system DNS server, the DNS server is configured to query, for the terminal, an address of an application server corresponding to a domain name that is not authorized in the visited network of the terminal, and the application server is configured to provide the terminal with a service corresponding to the first domain name; and
receiving, by the first network element, the address of the application server from the second network element.

20. The method according to claim 19, wherein the DNS server is a DNS server corresponding to a home network of the terminal, or the DNS server is a central DNS server in a central data network.

21. The method according to claim 19 or 20, wherein the method further comprises:
receiving, by the first network element, information from the second network element, wherein the information indicates a rule used for a query message that is from the terminal and that is used to query an address of an application server, and the rule comprises: when the query message used to query the address of the application server comprises a domain name that is not authorized in the visited network of the terminal, the first network element sends, to the second network element, the query message that comprises the unauthorized domain name and whose destination address is the address of the DNS server.

22. The method according to claim 19 or 20, wherein the method further comprises:
receiving, by the first network element, information from a second network element, wherein the information indicates a rule used for the first query message, and the rule comprises: the first network element provides the second network element with the second query message that comprises the first domain name and whose destination address is the address of the DNS server.

23. The method according to any one of claims 19 to 22, wherein the first network element is a function network element that is in the visited network of the terminal and that is configured to discover an application server, and the second network element is a function network element that is in the visited network of the terminal and that is configured to manage a session of the terminal.

24. The method according to any one of claims 19 to 23, wherein the receiving, by the first network element, the address of the application server from the second network element comprises:
receiving, by the first network element from the second network element, a second response message for the second query message, wherein the second response message comprises the address of the application server; and
the method further comprises:
sending, by the first network element to the terminal, a first response message for the first query message, wherein the first response message comprises the address of the application server.

25. The method according to any one of claims 19 to 24, wherein the method further comprises:
obtaining, by the first network element, information about a domain name authorized in the visited network of the terminal and/or information about a domain name that is not authorized in the visited network of the terminal; and
determining, by the first network element based on the information about the domain name, that the first domain name is not authorized in the visited network of the terminal.

26. The method according to claim 25, wherein the information about the domain name comprises a first domain name set, the first domain name set comprises one or more domain names authorized in the visited network of the terminal, and the first domain name does not belong to the first domain name set; and/or
the information about the domain name comprises a second domain name set, the second domain name set comprises one or more domain names that are not authorized in the visited network of the terminal, and the first domain name belongs to the second domain name set.

27. The method according to any one of claims 19 to 26, wherein that the first domain name is not authorized in the visited network of the terminal comprises: a service corresponding to the first domain name is not authorized by the home network of the terminal to be offloaded to a local data network.

28. A communication method, comprising:
receiving, by a second network element, a second query message from a first network element, wherein the second query message comprises information about a first domain name that is from a terminal, a destination address of the second query message is an address of a domain name system DNS server, the first domain name is not authorized in a visited network of the terminal, the DNS server is configured to query, for the terminal, an address of an application server corresponding to a domain name that is not authorized in the visited network of the terminal, the application server is configured to provide the terminal with a service corresponding to the first domain name, the second query message is used to query, for the terminal, the DNS server for an address of an application server corresponding to the first domain name, the first network element is a function network element that is in the visited network of the terminal and that is configured to manage a session of the terminal, and the second network element is a function network element that is in the visited network of the terminal and that is configured to discover an application server; and
querying, by the second network element for the terminal via a network element in a home network of the terminal, the DNS server for the address of the application server corresponding to the first domain name.

29. The method according to claim 28, wherein the DNS server is a DNS server corresponding to the home network of the terminal, or the DNS server is a DNS server in a central data network.

30. The method according to claim 28 or 29, wherein the method further comprises:
sending, by the second network element, information to the first network element, wherein the information indicates a rule used for a query message that is from the terminal and that is used to query the address of the application server, and the rule comprises: when the query message used to query the address of the application server comprises a domain name that is not authorized in the visited network of the terminal, the first network element sends, to the second network element, the query message that comprises the unauthorized domain name and whose destination address is the address of the DNS server.

31. The method according to any one of claims 28 to 30, wherein the method further comprises:
receiving, by the second network element, a third response message from a third network element, wherein the third response message comprises the address of the application server corresponding to the first domain name, and the third network element is a function network element that is in the home network and that is configured to manage a session of the terminal; and
the method further comprises:
sending, by the second network element to the first network element, a second response message for the second query message, wherein the second response message comprises the address of the application server corresponding to the first domain name.

32. The method according to any one of claims 28 to 31, wherein the querying, by the second network element for the terminal via a network element in a home network of the terminal, the DNS server for the address of the application server corresponding to the first domain name comprises:
sending, by the second network element, a third query message to the third network element, wherein the third query message is used to query, for the terminal, the DNS server for the address of the application server corresponding to the first domain name, the third query message comprises the information about the first domain name, and the third network element is the function network element that is in the home network and that is configured to manage the session of the terminal.

33. The method according to any one of claims 28 to 32, wherein that the first domain name is not authorized in the visited network of the terminal comprises: a service corresponding to the first domain name is not authorized by the home network to be offloaded to a local data network.

34. A communication method, comprising:
sending, by a second network element, first information to a terminal, wherein the first information indicates that a first network element is configured to discover an application server that provides a service for the terminal, the first network element and the second network element are in a visited network of the terminal, and the first network element and the second network element are in the visited network of the terminal;
sending, by the second network element, second information to the first network element, wherein the second information indicates a rule used for a query message that is from the terminal and that is used to query an address of the application server, and the rule comprises: when the query message used to query the address of the application server comprises a domain name that is not authorized in the visited network of the terminal, the first network element provides information about a home network of the terminal for a DNS server;
receiving, by the first network element, a first query message from the terminal, wherein the first query message comprises information about a first domain name, and the first domain name is not authorized in the visited network of the terminal;
sending, by the first network element, a second query message to the domain name system DNS server, wherein the second query message comprises the information about the first domain name and the information about the home network of the terminal, the information about the home network is used to determine the address of the application server, and the application server is configured to provide the terminal with a service corresponding to the first domain name;
receiving, by the first network element, the address of the application server from the DNS server; and
sending, by the first network element, the address of the application server to the terminal.

35. A communication method, comprising:
receiving, by a first network element, a first query message from a terminal, wherein the first query message comprises information about a first domain name, and the first domain name is not authorized in a visited network of the terminal;
sending, by the first network element, a second query message to a second network element, wherein the second query message comprises the information about the first domain name, a destination address of the second query message is an address of a domain name system DNS server, the DNS server is configured to query, for the terminal, an address of an application server corresponding to a domain name that is not authorized in the visited network of the terminal, and the application server is configured to provide the terminal with a service corresponding to the first domain name;
querying, by the second network element for the terminal via a network element in a home network of the terminal, the DNS server for an address of an application server corresponding to the first domain name;
receiving, by the first network element, the address of the application server from the second network element; and
sending, by the first network element, the address of the application server to the terminal.

36. A communication apparatus, comprising a processor, wherein the processor is coupled to a memory, the memory is configured to store a computer program, and the processor is configured to execute the computer program stored in the memory, to enable the communication apparatus to perform the method according to any one of claims 1 to 33.

37. A communication apparatus, comprising a module configured to perform the method according to any one of claims 1 to 33.

38. A communication system, comprising:
a communication apparatus configured to perform the method according to any one of claims 1 to 12 and a communication apparatus configured to perform the method according to any one of claims 13 to 18; and/or
a communication apparatus configured to perform the method according to any one of claims 19 to 27 and a communication apparatus configured to perform the method according to any one of claims 28 to 33.

39. A computer-readable storage medium, comprising a computer program, wherein when the computer program is run on a computer, the computer is enabled to perform the method according to any one of claims 1 to 33.

40. A computer program product, wherein the computer program product comprises a computer program, and when the computer program is run, a computer is enabled to perform the method according to any one of claims 1 to 33.

41. A communication method, comprising:
receiving, by a first network element, a first query message from a terminal, wherein the first network element is in a visited network of the terminal, the first query message comprises information about a first domain name, and the first domain name is not authorized in the visited network of the terminal;
sending, by the first network element, a second query message to a domain name system DNS server, wherein the second query message comprises the information about the first domain name and information about a home network of the terminal, and the information about the home network is used to determine an address of an application server; and
receiving, by the first network element, the address of the application server from the DNS server; and
the method further comprises:
receiving, by the DNS server, the second query message, and sending the address of the application server.
